# EUROPÄISCHE PATENTSCHRIFT

(11) **EP 3 324 149 B1**
(45) Veröffentlichungstag und Bekanntmachung des Hinweises auf die Patenterteilung: **20.03.2019**
(21) Anmeldenummer: 17201891.3
(22) Anmeldetag: 15.11.2017
(51) Int. Cl.: G01B 11/06, G01N 21/896, G01N 21/41, G01N 21/45, G01N 21/21, G01N 21/27

(54) **VERFAHREN UND VORRICHTUNG ZUR BESTIMMUNG VON OBERFLÄCHENMODIFIKATIONEN AUF OPTISCH TRANSPARENTEN BAUTEILEN**
METHOD AND DEVICE FOR THE DETERMINATION OF SURFACE MODIFICATIONS ON OPTICALLY TRANSPARENT COMPONENTS
PROCÉDÉ ET DISPOSITIF DE DÉTERMINATION DES MODIFICATIONS DE SURFACE DES COMPOSANTS OPTIQUEMENT TRANSPARENTS

(30) Priorität: 16.11.2016 DE 102016222551
(43) Veröffentlichungstag der Anmeldung: 23.05.2018
(73) Patentinhaber: Innovent e.V., 07745 Jena (DE)
(72) Erfinder: HERTZSCH, Albrecht, 07743 Jena (DE); HERLITZE, Lothar, 37691 Derental (DE); KRÖGER, Knut, 07745 Jena (DE)
(74) Vertreter: Liedtke, Markus

(56) Entgegenhaltungen:
- EP-A1- 3 086 082
- DE-A1-102012 102 756
- DE-B4-102007 043 937

## Beschreibung

Die Erfindung betrifft ein Messverfahren zur Erkennung von Abweichungen von spezifizierten Fertigungsmaßen an einem optisch transparenten Bauteil umfassend eine mindestens stückweise planparallele oder hohlzylindrisch geformte Substratlage, insbesondere zur Erkennung von Abweichungen von einer spezifizierten Planparallelität der Substratlage oder einer hierauf aufgetragenen Beschichtung. Die Erfindung betrifft ferner eine Vorrichtung zur Durchführung eines solchen Messverfahrens.

Die Überprüfung von Beschichtungszuständen im Nanometer- und Submikrometerbereich, beispielsweise auf Glasoberflächen, ist Aufgabenstellung in einer Vielzahl von Anwendungsfeldern. So bedarf es bei Glasverklebungen von Spiegelgläsern einer mechanischen Entschichtung der zu verklebenden Oberflächenbereiche, deren Entschichtungsqualität sowohl die Haftvermittlung bestimmt als auch visuelle Störeindrücke beeinflusst. Die Oberflächenqualität vor einem Beschichtungsprozess von Flachglas entscheidet wesentlich über die Beschichtungsgüte des nachfolgenden Beschichtungsprozesses. Dünne Verunreinigungsfilme führen hierbei zur Reduzierung oder zur Auslöschung der Oberflächenfunktion der Beschichtung und verursachen ebenfalls visuelle Inhomogenitäten, die zu vermeiden sind.

Aus dem Stand der Technik sind kamerabasierte Inspektionsanlagen für die Oberflächenprüfung von Flachglas insbesondere in einem Floatglasherstellungsprozess bekannt. Dabei werden Produktionsfehler wie Blasen, Knoten, Steine, Zinnfehler, Beschichtungsdefekte sowie fehlerhafte optische Qualität verursacht durch Ziehstreifen direkt am Glasband kontrolliert. Mit einer Multi-Mode Light Emitting Device (LED) Beleuchtung wird über die gesamte Breite des Glasbandes die Oberfläche ausgeleuchtet. Mit Kameras werden Störungen erfasst und mittels anlernbarer Klassifizierungsalgorithmen erkannt oder klassifiziert. Mit derartigen Inspektionsanlagen erkennbare Oberflächenmodifikationen sind jedoch durch das optische Auflösungsvermögen der abbildenden Optik beziehungsweise der Kameras begrenzt.

Aus dem Stand der Technik sind ferner Verfahren basierend auf der in-situ Ellipsometrie für eine Charakterisierung von dünnen Flachglasbeschichtungen mit Schichtdicken im Nanometerbereich bekannt. Derartige Verfahren sind jedoch auf einen deutlichen Unterschied zwischen der Brechzahl des Beschichtungsmaterials und der Brechzahl des beschichteten Substrats angewiesen. Zudem eignen sich klassische spektroskopische Ellipsometer für optisch transparente Objekte wie beispielsweise Flachglas nur sehr eingeschränkt.

Die DE 10 2007 043 937 B4 beschreibt ein Verfahren zur Bestimmung der Dicke und des Brechungsindex von optisch transparenten Schichten auf optisch transparenten planparallelen Substraten, bei dem das zu analysierende beschichtete Substrat in einem vorgebbaren Winkelbereich beidseits des Brewsterwinkels mit einem parallel-polarisierten Beleuchtungsstrahlenbündel beleuchtet wird und eine Detektoreinheit sowohl das reflektierte Lichtbündel von der Oberfläche der Beschichtung als auch das reflektierte Lichtbündel von der Substratrückseite zugleich und räumlich voneinander getrennt erfasst. Es werden jeweils Intensitätsverlaufskurven von Vorder- und Rückreflex in Abhängigkeit vom Einfallswinkel des parallel-polarisierten Beleuchtungsstrahlenbündels generiert. Aus den jeweiligen Minimumstellen beider Intensitätsverlaufskurven und aus dem Einfallswinkelwert des Schnittpunkts beider Intensitätsverlaufskurven werden nach einem numerischen iterativen Verfahren unter Verwendung des formelmäßigen Zusammenhangs für eine Vielstrahlinterferenz die Schichtdicke und die Brechzahl der Beschichtung ermittelt.

Die EP 3 086 082 A1 beschreibt ein Verfahren zur Inspektion eines, insbesondere ebenen, Gegenstands umfassend eine Textur mit einem aufgedruckten vorgegebenen Farbverlauf, und eine durchsichtige Kunststoffschicht mit reliefartigem, dem Farbverlauf entsprechenden, Verlauf, die über der Textur angeordnet ist, zur Ermittlung, ob die Textur und die Kunststoffschicht passgenau übereinander liegen, a) wobei der Gegenstand mit unpolarisiertem Licht beleuchtet wird, das im Brewster-Winkel, allenfalls mit einer Abweichung von maximal 10°, auf den Gegenstand gestrahlt wird, b) wobei der Gegenstand von der gegenüberliegenden Seite mittels einer Aufnahmeeinheit aufgenommen wird, deren optische Achse im Brewster-Winkel, allenfalls mit einer Abweichung von maximal +/- 10°, zur Oberfläche des Gegenstands steht, und wobei die optische Achse der Aufnahmeeinheit und Einstrahlrichtung des eingestrahlten Lichts in einer Ebene liegen, c) wobei mit der Aufnahmeeinheit ein erstes Bild des Gegenstands erstellt wird, wobei zur Aufnahme lediglich Licht mit einer Polarisation senkrecht zur Einfallsebene herangezogen wird, d) wobei mit der Aufnahmeeinheit ein zweites Bild des Gegenstands erstellt wird, wobei zur Aufnahme lediglich Licht mit einer Polarisation parallel zur Einfallsebene herangezogen wird, e) wobei die beiden Bilder durch Korrelation miteinander verglichen werden und ein Versatz der beiden Bilder zueinander aufgrund des Ergebnisses der Korrelation ermittelt wird, und f) dass der so ermittelte Versatz mit einem vorgegebenen Schwellenwert verglichen wird und bei Überschreitung des Schwellenwerts durch den Versatz festgestellt wird, dass die Textur und die Kunststoffschicht nicht passgenau übereinander liegen.

Die DE 10 2012 102 756 A1 beschreibt eine Anordnung zur optischen Detektion vergrabener Schichten von flachen Objekten mit mehreren Schichten, insbesondere Wafer, enthaltend eine Strahlungsquelle zur Beleuchtung der Oberfläche des Objekts; ein im Strahlengang angeordnetes Polarisationsfilter; und einen Detektor zur Erfassung von der Oberfläche des Objekts reflektierten oder von dem Objekt durchgelassenen Strahlung; ist dadurch gekennzeichnet, dass die der Strahlungsquelle am nächsten liegende Schicht des Objekts für die Strahlung der Strahlungsquelle zumindest teilweise durchlässig ist; das Polarisationsfilter nur für Strahlung durchlässig ist, die parallel zur Einfallsebene polarisiert ist; und die Beleuchtung der Oberfläche des Objekts unter Brewsterwinkel erfolgt. Die Oberfläche des Objekts wird vorzugsweise mit unpolarisierter Strahlung beleuchtet und das Polarisationsfilter ist im Strahlengang zwischen der Oberfläche des Objekts und dem Detektor angeordnet.

Für die Abbildung und Vermessung der Reflexe sind bei diesem Verfahren Kamerabilder mit sehr hoher Belichtungszeitdynamik notwendig. Die Bildaufnahme muss meist in einem High-Dynamic-Modus erfolgen, da die Reflexe, bedingt durch die Beleuchtung im Brewster-Winkel mit parallel-polarisiertem Licht, im Auslöschungsbereich erfasst werden und somit die winkelabhängige Intensitätsverteilung einen hohen Dynamikbereich einschließt Das führt zu längeren Messzeiten, die insbesondere bei einem großflächigen Abscannen von Oberflächen im Rahmen einer Qualitätskontrolle die Praxistauglichkeit des Verfahrens begrenzen.

Die DE 3908155 A1 beschreibt ein Verfahren und ein Messsystem zur genauen Vermessung dünner dielektrischer Schichten auf einem Substrat durch Beaufschlagen der Schicht durch einen linear polarisierten Laserstrahl unter dem für das Substrat spezifischen Brewsterwinkel und Bestimmung der Differenz zwischen einer Intensitätsmessung an dem unbelegten und einer Intensitätsmessung an dem von der Schicht belegten Substrat.

Die US 5,209,813 A beschreibt ein lithografisches Verfahren und eine lithografische Vorrichtung, mittels welcher die Höhe eines lithografisch bearbeiteten Silizium-Wafers genau vermessen wird. Eine lithografische Vorrichtung, beispielsweise eine Elektronenstrahlvorrichtung mit eingebauter Höhenmessung, wird zur Erzeugung eines Musters im Submikrometerbereich verwendet.

Der Erfindung liegt die Aufgabe zu Grunde, ein verbessertes Verfahren zur Erkennung von Abweichungen von spezifizierten Fertigungsmaßen an einem optisch transparenten Bauteil mit einer rückseitig angeordneten planparallelen Substratlage, insbesondere zur Erkennung von Abweichungen von einer spezifizierten Planparallelität der Substratlage oder einer hierauf aufgetragenen Beschichtung, anzugeben, das insbesondere schneller und/oder kostengünstiger als Verfahren aus dem Stand der Technik durchführbar ist. Der Erfindung liegt ferner die Aufgabe zu Grunde, eine Vorrichtung zur Durchführung eines solchen Verfahrens anzugeben.

Die Aufgabe wird hinsichtlich des Verfahrens erfindungsgemäß gelöst durch die Merkmale des Anspruchs 1. Hinsichtlich der Vorrichtung wird die Aufgabe durch die Merkmale des Anspruchs 9 gelöst. Ein weiteres erfindungsgemäßes Verfahren zur Kalibrierung der Messvorrichtung ist im Anspruch 13 definiert.

Vorteilhafte Ausgestaltungen der Erfindung sind Gegenstand der abhängigen Ansprüche.

Bei einem Verfahren zur Erkennung von Modifikationen an einem Bauteil mit einer Substratlage aus einem optisch transparenten Substrat wird auf mindestens eine Oberfläche der Substratlage mittels einer Beleuchtungseinheit ein Beleuchtungsstrahlenbündel in einem linienförmigen Beleuchtungsabschnitt fokussiert abgebildet. In der Ausdehnungsrichtung des linienförmigen Beleuchtungsabschnitts sind die Beleuchtungsstrahlen des Beleuchtungsstrahlenbündels kollimiert. In einer Einfallsebene laufen alle Beleuchtungsstrahlen in einem Winkelbereich symmetrisch um den Brewster-Winkel des Substrats in einem Punkt des linienförmigen Beleuchtungsabschnitts zusammen. Der halbe Öffnungswinkel dieses Winkelbereichs beträgt zwischen einem und drei Grad. Das Beleuchtungsstrahlenbündel ist parallel zur Einfallsebene polarisiert. Mittels einer Detektoreinheit wird die summarische Intensität mindestens eines Messstrahlenbündels erfasst, das durch Reflexion des Beleuchtungsstrahlenbündels an einer Oberfläche der Substratlage entsteht. Diese summarische Intensität wird mit mindestens einem Referenzwert verglichen. Die Substratlage kann als planparallele Platte ausgebildet sein. Dabei wird der linienförmige Beleuchtungsabschnitt auf eine Plattenoberfläche projiziert. Die Substratlage kann auch als Hohlzylinder oder Rohr ausgebildet sein. Dabei wird der linienförmige Beleuchtungsabschnitt parallel zur Längsachse oder senkrecht zur Längsachse auf den Außenmantel des Hohlzylinders projiziert.

Parallel polarisiertes Licht, das unter dem Brewster-Winkel des Substrats auf die Substratlage fällt, wird vollständig transmittiert. Die summarische Intensität eines von einem Beleuchtungsstrahlenbündel mit kleinem Öffnungswinkel reflektierten Messstrahlenbündels ist unter dieser Brewster-Bedingung somit sehr gering.

Ist die Substratlage mit einer Beschichtung versehen, die eine andere Brechzahl aufweist als das Substrat, so weicht auch der Brewster-Winkel der beschichteten Substratlage vom Brewster-Winkel der unbeschichteten Substratlage ab. Durch Veränderung des Brewster-Winkels bei gleicher Anordnung der Beleuchtungseinheit und der Detektoreinheit ist die summarische Intensität des an der Oberfläche der Beschichtung reflektierten Messstrahlenbündels größer als die summarische Intensität des an der unbeschichteten Oberfläche der Substratlage reflektierten Messstrahlenbündels. Mittels eines Referenzprüfkörpers kann ein Referenzwert für die summarische Intensität des Reflexes bei einer unbeschichteten Substratlage oder auch bei einer beschichteten Substratlage bestimmt werden. Aus dem Vergleich zwischen einer gemessenen summarischen Intensität mit einem solchen Referenzwert kann somit der Beschichtungszustand der Substratlage ermittelt werden. In analoger Weise können örtliche Unterschiede im Beschichtungszustand einer Substratlage ermittelt werden, indem an verschiedenen Orten der Oberfläche Werte für die summarische Intensität gemessen und miteinander verglichen werden.

Da das Verfahren im Auslöschungsbereich der Reflexe arbeitet, reagiert es sehr empfindlich auf kleinste Oberflächenstörungen, seien sie hervorgerufen durch Beschichtungsfehler, Verunreinigungsfilme oder chemische Oberflächenänderungen.

Durch die erfindungsgemäße Beleuchtung mit Beleuchtungsstrahlen in einem Winkelbereich um den Brewster-Winkel des Substrats führen Änderungen des Brewster-Winkels aufgrund dünner Beschichtungen des Substrats nicht zu einem abrupten Verlust der Reflexauslöschung, sondern zu einer allmählich mit zunehmender Dicke der Beschichtung zunehmenden summarischen Intensität des reflektierten Messstrahlenbündels. Somit ist in vorteilhafter Weise eine Unterscheidung zwischen Beschichtungen unterschiedlicher Dicke anhand der gemessenen summarischen Intensität möglich. Ferner ist die Bestimmung der Dicke einer Beschichtung durch Vergleich einer gemessenen summarischen Intensität mit einem Referenzwert für die summarische Intensität der unbeschichteten Substratlage möglich, wenn der Brechungsindex des Beschichtungsmaterials bekannt ist.

Ferner führen Abweichungen von der Planparallelität einer planparallel ausgebildeten Substratlage, insbesondere eine Welligkeit der Oberfläche und/oder der Rückfläche, zu Abweichungen von der Brewster-Bedingung und somit zu Messwerten für die summarische Intensität, die vom Referenzwert für eine planparallele Substratlage abweichen. Insbesondere führt eine Welligkeit zu regelmäßigen, näherungsweise periodischen Schwankungen der Messwerte für die summarische Intensität, die entlang einer Messspur aufgenommen werden, die nicht parallel zur Welligkeit liegt.

In vorteilhafter Weise sind diese Auswertungen durch Messung und Verarbeitung von einem oder von wenigen eindimensionalen Messwerten für summarische Intensitäten möglich und lassen sich daher schneller und mit geringerem Hardwareaufwand umsetzen als die Verarbeitung von zweidimensionalen Kamerabildern in Verfahren nach dem Stand der Technik.

Bei einer Ausführungsform des Verfahrens wird für ein vorderflächiges Messstrahlenbündel zusätzlich zu der summarischen Intensität mittels mindestens eines ortsauflösenden Sensors der geometrische Schwerpunkt der Intensitätsverteilung des mindestens einen an einer Oberfläche der Substratlage reflektierten Messstrahlenbündels in der Auffangebene des Sensors erfasst. Der geometrische Schwerpunkt wird mit einem geometrischen Messlichtnullpunkt verglichen, der als geometrischer Schwerpunkt der Intensitätsverteilung des vorderflächigen Messstrahlenbündels an einer planparallelen, unbeschichteten Substratlage ermittelt wurde. Der geometrische Schwerpunkt des vorderflächigen Messstrahlenbündels kann mittels eines ersten Sensors bestimmt und mit einem ersten Messlichtnullpunkt in der Auffangebene des ersten Sensors verglichen werden.

In analoger Weise ist es möglich, für ein rückflächiges Messstrahlenbündel zusätzlich zu der summarischen Intensität mittels eines ortsauflösenden zweiten Sensors den geometrischen Schwerpunkt der Intensitätsverteilung des rückflächigen Messstrahlenbündels in der Auffangebene eines zweiten Sensors zu erfassen und mit einem zweiten geometrischen Messlichtnullpunkt zu vergleichen, der als geometrischer Schwerpunkt der Intensitätsverteilung des rückflächigen Messstrahlenbündels an einer planparallelen, unbeschichteten Substratschicht ermittelt wurde. Die Erfassung der summarischen Intensität und des geometrischen Schwerpunkts der Intensitätsverteilung kann auch simultan für das vorderflächige und für das rückflächige Messstrahlenbündel erfolgen.

Eine dünne Beschichtung auf der Oberfläche der Substratlage bewirkt eine Änderung des Brewster-Winkels. Aufgrund des Öffnungswinkels des Beleuchtungsstrahlenbündels ist auch für einen leicht geänderten Brewster-Winkel die bewirkte Reflexauslöschung von einem ausgedehnten lichtempfindlichen Sensor auffangbar und führt somit zu einer gegenüber der summarischen Referenzintensität geänderten summarischen Intensität. Allerdings wird diese Reflexauslöschung in der Auffangebene des ersten Sensors auf einen anderen Ort projiziert als die Reflexauslöschung für eine unbeschichtete Substratlage. Der ortsauflösende lichtempfindliche erste Sensor liefert den geometrischen Schwerpunkt der Intensitätsverteilung in seiner Auffangebene. Somit können durch Vergleich der summarischen Intensität mit der summarischen Referenzintensität und durch Vergleich des geometrischen Schwerpunkts mit dem geometrischen Nullpunkt auch Modifikationen durch sehr dünne oberflächliche Beschichtungen erkannt werden. In gleicher Weise ist auch die Erkennung von sehr geringen Variationen der Schichtdicke einer oberflächlichen Beschichtung möglich.

Ebenso führt eine sehr schwache geometrische Welligkeit der Substratlage zu einer Verschiebung der Reflexauslöschung gegenüber dem geometrischen Nullpunkt auf der Auffangebene des ersten Sensors.

In einer Ausführungsform des Verfahrens wird der geometrische Schwerpunkt mindestens eines Messstrahlenbündels mit einem positionsempfindlichen Detektor, auch als position sensitive device PSD bezeichnet, bestimmt. In vorteilhafter Weise kann dadurch die Ausführung rechenintensiver Verfahren zur Schwerpunktermittlung bei zeilen- oder matrixbasierten Sensoren vermieden werden. Dadurch wird eine besonders schnelle Abtastung ermöglicht, die eine örtlich sehr feine Untersuchung und/oder die Untersuchung großflächigerer Bauelemente erlaubt.

Bei einer Ausführungsform des Verfahrens werden in einem nachfolgend noch genauer erklärten Kalibrationsverfahren eine summarische Referenzintensität und ein geometrischer Messlichtnullpunkt für mindestens ein Messstrahlenbündel an einem Referenzprüfkörper ermittelt, der als unbeschichtete Substratlage mit einer spezifikationsgemäßen Substratdicke gewählt ist. Darauffolgend werden eine summarische Intensität und ein geometrischer Messlichtschwerpunkt für ein korrespondierendes Messstrahlenbündel an einem Bauteil vermessen und mit der im Kalibrationsverfahren bestimmten summarischen Referenzintensität beziehungsweise dem geometrischen Messlichtnullpunkt verglichen. Das Bauteil kann einseitig oder beidseitig beschichtet sein. Die Abhängigkeit des Reflexionsgrads für parallel polarisiertes Licht von der Schichtdicke und von den Brechungswinkeln an den Grenzflächen einer oberflächlichen Beschichtung ist beispielsweise aus der Druckschrift DE 10 2007 043 937 B4, [0009] bis [0019] bekannt, deren diesbezüglicher Offenbarungsgehalt in den Offenbarungsgehalt dieser Anmeldung aufgenommen wird. Bei bekanntem Beschichtungsmaterial, insbesondere bei bekanntem Brechungsindex des Beschichtungsmaterials und somit bekanntem Brechungswinkel an den Grenzflächen Luft - Beschichtung und Beschichtung - Substratlage, kann aus dem Verhältnis zwischen der summarischen Intensität und der summarischen Referenzintensität sowie an der Abweichung des Messlichtschwerpunktes vom Messlichtnullpunkt des Referenzprüfkörpers unter Verwendung des Zusammenhangs für ein theoretisches Reflexionsgradminimum bei einer Vielstrahlinterferenz eine Schichtdicke zugeordnet werden.

Die Substratfläche kann durch Aufnahme einer Vielzahl von Messwerten für die summarische Intensität und den Messlichtschwerpunkt abgetastet werden. Dabei kann anhand des verhältnismäßigen Anstiegs zwischen der Änderung der summarischen Intensität und der Verschiebung des Messlichtschwerpunkts unterschieden werden, ob es sich um eine geometrische Welligkeit oder um eine Beschichtungsänderung handelt.

Da die Winkelverschiebung des Intensitätsschwerpunkts und die Änderung der summarischen Intensität auf einer Interferenzerscheinung beruhen, folgen diese Abhängigkeiten bezogen auf die Schichtdicke einer sinusförmigen Funktion, deren Periodenlängen von der Beleuchtungswellenlänge abhängen. Je langwelliger die Wellenlänge des Lichts ist, umso größer wird auch die Periodenlänge dieser sinusförmigen Funktionen von summarischer Intensität und Intensitätsschwerpunktlage. So beträgt beispielsweise im visuellen Bereich für beschichtetes optisches Borosilikat-Kronglas bei einer Brechzahldifferenz von -0.05 zwischen dem Substrat und der Beschichtung für blaues Licht bei einer Wellenlänge von 390 Nanometer die Periodenlänge der Winkelschwerpunktlage, und somit des Messlichtschwerpunkts 160 Nanometer. Für rotes Licht bei einer Wellenlänge von 760 Nanometer beträgt die Periodenlänge der Winkelschwerpunktlage entsprechend 318 Nanometer.

Jedoch sinkt im gleichen Verhältnis der Signalhub, so dass kleine Signaländerungen besser mit kurzwelligerem Licht, beispielsweise blau-grünem Licht, gemessen werden. Die Periodenlänge des Sinusverlaufs der summarischen Intensität ist gegenüber der Periodenlänge der Ortsänderung des Intensitätsschwerpunkts in Abhängigkeit vom Integrationsbereich der Reflexionsgradkurve leicht reduziert. Je größer der Integrationsbereich ist, desto größer ist der Unterschied in den Periodenlängen. Das führt bei mehreren Perioden zu einem Auseinanderlaufen der Funktionen. Jedoch ist bei Beschichtungsdicken von 70 Nanometern bis 150 Nanometern je nach Beleuchtungswellenlänge im Bereich der ersten halben Periode das Verhältnis der Kurvenanstiege von Intensitätsschwerpunkt und summarischer Intensität nahezu konstant. Der Wert dieses Verhältnisses beschreibt die Brechzahldifferenz zwischen Substrat und Beschichtung.

Bei geometrischen Welligkeiten der Substratlage führen die Änderungen des Einfallswinkels der Beleuchtungsstrahlenbündel durch die lokale Oberflächenneigung der Substratlage zu einer linearen Winkelverschiebung des Intensitätsschwerpunkts, während die Änderungen der summarischen Intensität einer Parabelfunktion folgen. Somit beschreibt das Verhältnis der Kurvenanstiege von Intensitätsschwerpunkt und summarischer Intensität eine Gerade mit festem beziehungsweise konstantem Anstieg.

Es ist damit möglich, anhand der Differenz der Anstiege von summarischer Intensität und Winkellage der Intensitätsschwerpunkte zwischen geometrischer Welligkeit und Beschichtungsdickenänderung zu unterscheiden. Bleibt das Verhältnis bei sich ändernden Parametern konstant, ist von Beschichtungsdickenänderung auszugehen. Bewegen sich die Werte des Verhältnisses auf einer Gerade mit konstantem positivem Anstieg, verursachen geometrische Welligkeiten die Parameteränderung.

Weiterhin sind die Parameteränderungen bei geometrischer Welligkeit sehr klein und über große örtliche Abstände verteilt. Demzufolge sind auch die resultierenden Signalverschiebungen klein und langwellig. Im Gegensatz dazu führt eine Änderung der Beschichtungsdicke von wenigen Nanometern zu deutlichen Änderungen sowohl des summarischen Intensitätswertes als auch der Schwerpunktlage des Messstrahlenbündels zwischen Messorten mit geringem Abstand. Somit ist eine Unterscheidung zwischen durch eine geometrische Welligkeit hervorgerufenen Modifikation und einer durch eine Beschichtungsänderung hervorgerufenen Modifikation möglich.

Bei einer Ausführungsform des Verfahrens wird simultan zur Messung der summarischen Intensität des vorderflächigen Messstrahlenbündels die summarische Intensität eines an einer Rückfläche der Substratlage reflektierten rückflächigen Messstrahlenbündels erfasst. Die summarische Intensität des rückflächigen Messstrahlenbündels kann mit einem zweiten ortsauflösenden Sensor erfasst werden.

Mittels gleichzeitiger Auswertung der summarischen Intensität für ein an der Vorderfläche des Bauteils reflektiertes vorderflächiges Messstrahlenbündel und für ein an der Rückfläche der Substratlage reflektiertes rückflächiges Messstrahlenbündel lässt sich eine geometrische Welligkeit der Substratlage von einer Beschichtung oder einer Modifikation der Beschichtung unterscheiden: eine geometrische Welligkeit variiert sowohl die vorderflächige als auch die rückflächige summarische Intensität, während eine Beschichtung nur die vorderflächige summarische Intensität variiert. In vorteilhafter Weise kann mit dieser Ausführungsform der Erfindung eine Modifikation an einem optisch transparenten Bauteil somit genauer beschrieben werden.

Bei einer Ausführungsform des Verfahrens werden das vorderflächige Messstrahlenbündel und das rückflächige Messstrahlenbündel auf einen gemeinsamen ortsauflösenden Sensor gelenkt und somit der geometrische Schwerpunkt der überlagerten Intensitätsverteilungen beider Messstrahlenbündel erfasst. In vorteilhafter Weise kann eine Störung auf einer Oberfläche einer Substratlage durch eine Verschiebung des geometrischen Schwerpunkts der überlagerten Intensitätsverteilungen relativ zu einem Messlichtnullpunkt ermittelt werden. Ein Kalibrationsverfahren zur Bestimmung eines Messlichtnullpunkts wird nachfolgend noch genauer erklärt.

Bei einer Ausführungsform des Verfahrens wird eine erste summarische Intensität eines ersten, an einer ersten Oberfläche der Substratlage reflektierten Messstrahlenbündels ermittelt und simultan eine zweite summarische Intensität eines zweiten, an einer gegenüberliegenden zweiten Oberfläche der Substratlage reflektierten Messstrahlenbündels ermittelt. Ist die zweite summarische Intensität in der Größenordnung der summarischen Referenzintensität des unbeschichteten Substrats, so wird das Verhältnis zwischen der ersten und der zweiten summarischen Intensität bestimmt. Ist dieses Verhältnis kleiner als fünfzig, so wird eine Beschichtung der ersten Oberfläche mit einer dielektrischen Einfachschicht ermittelt.

Bei einer Ausführungsform des Verfahrens wird der linienförmige Beleuchtungsabschnitt in einer vorbestimmten Messspur über das Bauteil bewegt. Entlang der Messspur werden Messungen der summarischen Intensität und/oder des geometrischen Schwerpunkts der Intensitätsverteilung mindestens eines Messstrahlenbündels vorgenommen. Die zeitlichen oder die örtlichen Abstände zwischen den Messungen sind vorbestimmt. Beispielsweise können Messungen mit einer Abtastfrequenz von 100 Kilohertz bei einer Verfahrgeschwindigkeit entlang der Messspur von 10 Metern pro Sekunde vorgenommen werden, wodurch örtliche Messabstände von 100 Mikrometern erzielt werden können. In vorteilhafter Weise können so auch großflächige Bauelemente mit ausreichender örtlicher Auflösung untersucht werden.

Bei einer weiteren Ausführungsform des Verfahrens werden sowohl das vorderflächige als auch das rückflächige Messstrahlenbündel auf ein und denselben ortsauflösenden Sensor abgebildet und somit der geometrische Schwerpunkt der überlagerten Intensitätsverteilungen des vorderflächigen Messstrahlenbündels und des rückflächigen Messstrahlenbündels erfasst wird. Mittels eines nachfolgend noch näher beschriebenen Kalibrationsverfahrens können die Schwerpunkte beider Messstrahlenbündel für eine spezifikationsgemäße Substratlage so ausgerichtet werden, dass sie in gleichem Abstand vom Mittelpunkt des ortsauflösenden Sensors liegen. Für eine spezifikationsgemäße Substratlage erzeugen die Messstrahlenbündel zusammen ein positives und ein negatives Positionssignal, das jeweils den Abstand eines Messstrahlenbündels zum Sensormittelpunkt angibt. Die Überlagerung beider Positionssignale hebt sich in diesem Fall auf und erzeugt einen Nullschwerpunkt. Bei kleinen Störungen auf der Vorderfläche oder auf der Rückfläche der Substratlage wird dieses Gleichgewicht hingegen je nach Ort der Störung durch Verlagerung des Messlichtschwerpunkts in ein positives oder negatives Positionssignal gewandelt. Somit ist es möglich, sehr empfindlich auf kleine Störungen einer bevorzugt unbeschichteten Substratlage zu reagieren und die Oberflächengüte bezüglich Verunreinigungen und Oberflächenmodifikationen zu prüfen.

Bei einer Ausführungsform des Verfahrens werden entlang einer Messspur Änderungen der summarischen Intensität und Änderungen des geometrischen Schwerpunkts der Intensitätsverteilung mindestens eines Messstrahlenbündels ermittelt und daraus ein linearer Regressionskoeffizient bestimmt, wobei die Änderung der summarischen Intensität als abhängige statistische Variable und die Änderung des geometrischen Schwerpunkts der Intensitätsverteilung als unabhängige statistische Variable behandelt werden. Der ermittelte Regressionskoeffizient gibt somit den Anstieg einer Regressionsgeraden an, welche im Sinne einer quadratischen Näherung bestmöglich einen linearen Zusammenhang zwischen der Änderung des geometrischen Schwerpunkts der Intensitätsverteilung und der Änderung der summarischen Intensität beschreibt.

Für endlich viele Messungen entlang der Messspur ist der ermittelte Regressionskoeffizient selbst eine Zufallsgröße. Mittels aus dem Stand der Technik bekannter Verfahren, beispielsweise mittels eines t-Tests, kann bestimmt werden, ob dieser Regressionskoeffizient statistisch signifikant von Null abweicht. Erfindungsgemäß wird ein statistisch signifikant von Null abweichender positiver Regressionskoeffizient einer geometrischen Welligkeit der Substratlage zugeordnet. Ein statistisch nicht signifikant von Null abweichender Regressionskoeffizient wird einer Modifikation in der Beschichtung der Substratlage zugeordnet. In vorteilhafter Weise ist es damit möglich, zwischen einer Modifikation der Beschichtung und einer geometrischen Welligkeit durch Vermessung der summarischen Intensität und des geometrischen Schwerpunkts nur eines Messstrahlenbündels zu unterscheiden.

Eine Messvorrichtung zur Durchführung eines Verfahrens zur Erkennung von Modifikationen an einem optisch transparenten Bauteil mit einer planparallelen Substratlage umfasst
- eine in einer Beleuchtungsstrahlrichtung ausgerichtete Beleuchtungseinheit mit in Beleuchtungsstrahlrichtung aufeinanderfolgend angeordnet einer Laserquelle, einem Linearpolarisator, einem Polarisationsdreher und einer Zylinderlinse zur Erzeugung eines längs der Zylinderachse der Zylinderlinse kollimierten Beleuchtungslichtbündels sowie
- eine in einer Messstrahlrichtung ausgerichtete Detektoreinheit mit einem ersten lichtempfindlichen Sensor, der zur Messung der summarischen Intensität eines Messstrahlenbündels vorgesehen ist.

Dabei ist der Winkel zwischen der Beleuchtungsstrahlrichtung und der Messstrahlrichtung an den doppelten Brewsterwinkel des Substrats anpassbar. Die Brechkraft der Zylinderlinse ist so gewählt, dass das Beleuchtungslichtbündel im wirksamen Hauptschnitt im Schnittpunkt der Beleuchtungsstrahlrichtung und der Messstrahlrichtung fokussiert ist und einen halben Öffnungswinkel von zwischen einem Grad und drei Grad aufweist.

Zur Untersuchung eines optisch transparenten Bauelements mit einer Substratlage aus einem optisch transparenten Substrat ist die Messvorrichtung so über dessen Oberfläche anzuordnen, dass die Brennlinie der Zylinderlinse auf der Oberfläche liegt und die Messstrahlrichtung senkrecht zu dieser Brennlinie ausgerichtet ist.

In vorteilhafter Weise lässt sich durch Veränderung des Winkels zwischen der Beleuchtungsstrahlrichtung und der Messstrahlrichtung die Messvorrichtung auf Brewsterwinkel verschiedener Materialien anpassen, so dass Bauelemente mit verschiedenen Substratmaterialien mit einer Messvorrichtung untersucht werden können.

Bei einer Ausführungsform der Messvorrichtung umfasst die Detektoreinheit einen Strahlteiler und einen zweiten lichtempfindlichen Sensor, wobei der Strahlteiler zur Trennung des ersten vorderflächigen Messstrahlenbündels von einem parallel zur Messstrahlrichtung versetzten zweiten rückflächigen Messstrahlenbündel vorgesehen ist und das erste vorderflächige Messstrahlenbündel auf den ersten Sensor abbildet und das zweite rückflächige Messstrahlenbündel auf den zweiten Sensor abbildet. Der Strahlteiler kann so angeordnet sein, dass er aus dem Strahlengang entlang der Messstrahlrichtung ausgeschwenkt werden kann.

Mit dieser Ausführungsform der Messvorrichtung ist es möglich, simultan Messstrahlenbündel zu vermessen, die an verschiedenen Grenzflächen eines Bauelements reflektiert werden. Wie bereits dargestellt, ist damit eine genauere Beschreibung von Modifikationen an dem Bauelement, beispielsweise eine Unterscheidung zwischen einer geometrischen Welligkeit und einer Beschichtungsinhomogenität oder auch eine Bestimmung der Dicke einer Beschichtung möglich.

Bei einer Ausführung der Messvorrichtung weisen die Sensoren eine Apertur auf, die doppelt so groß ist wie die Beleuchtungsapertur der Beleuchtungseinheit. In vorteilhafter Weise kann dadurch eine Reflexauslöschung auch bei leicht geändertem Brewster-Winkel oder bei einer leichten Kippung der reflektierenden Oberfläche beispielsweise infolge einer geometrischen Welligkeit bestimmt werden.

Bei einer weiteren Ausführung der Messvorrichtung ist der erste lichtempfindliche Sensor ortsauflösend als positionsempfindlicher Detektor ausgebildet. Der zweite lichtempfindliche Sensor ist ortsauflösend als Zeilenkamera oder als positionsempfindlicher Detektor ausgebildet.

Mittels positionsempfindlicher Detektoren ist die Bestimmung des geometrischen Schwerpunkts eines Messstrahlenbündels besonders leicht und insbesondere ohne Rechenaufwand möglich. Diese Ausführungsform der Messvorrichtung erlaubt daher besonders schnelle und/oder besonders dichte Messungen an optisch transparenten Bauteilen.

Mittels einer Zeilenkamera kann der Schwerpunkt eines Messstrahlenbündels entlang einer Dimension besonders genau ermittelt werden. Diese Ausführungsform der Messvorrichtung erlaubt daher eine besonders empfindliche Messung, beispielsweise eine Bestimmung einer sehr schwachen geometrischen Welligkeit oder einer sehr dünnen Beschichtung auf der Substratlage.

Bei einem Verfahren zur Kalibration einer Messvorrichtung wird ein Referenzprüfkörper mit einer Substratlage vorbestimmter Dicke und aus vorbestimmtem Substratmaterial mit einem Beleuchtungsstrahlenbündel beleuchtet. Das Beleuchtungsstrahlenbündel ist elliptisch polarisiert. Die Beleuchtungseinheit und die Detektoreinheit sind im doppelten Brewster-Winkel des Substratmaterials angeordnet. Das Beleuchtungsstrahlenbündel wird an der Rückfläche der Substratlage als rückflächiges Messstrahlenbündel teilweise reflektiert. Erfindungsgemäß werden die Beleuchtungseinheit und die Detektoreinheit relativ zu dem Referenzprüfkörper so ausgerichtet, dass der geometrische Schwerpunkt der Intensitätsverteilung des in der Auffangebene des ortsauflösenden zweiten Sensors aufgefangenen rückflächigen Messstrahlenbündels an einer vorbestimmten geometrischen Kalibrationsposition liegt.

Bei einer Ausführungsform des Kalibrierverfahrens wird zudem der ortsauflösende erste Sensor in der Detektoreinheit so ausgerichtet, dass der geometrische Schwerpunkt der Intensitätsverteilung des in der Auffangebene des ortsauflösenden ersten Sensors aufgefangenen vorderflächigen Messstrahlenbündels an einer vorbestimmten geometrischen Kalibrationsposition liegt.

Bevorzugt sind die Kalibrationspositionen für den zweiten und optional für den ersten Sensor jeweils mittig auf der Auffangebene des Sensors gewählt.

Anschließend wird der Referenzprüfkörper mit parallel polarisiertem Licht beleuchtet, indem der Polarisationsdreher der Beleuchtungseinheit so rotiert wird, dass die Beleuchtungseinheit in der Einfallsebene parallel polarisiertes Licht abgibt, welches nun unter dem Brewster-Winkel auf die Substratlage fällt. Somit liegt die Stelle maximaler Reflexauslöschung innerhalb der Intensitätsverteilung auf der Auffangebene des zweiten und optional auch des ersten Sensors an den vorbestimmten Kalibrationspositionen, wenn die Brechzahl an der Vorderfläche der Substratlage gleich der Brechzahl an der Rückfläche der Substratlage ist. Brechzahlunterschiede zwischen den Oberflächen der Substratlage, beispielsweise bewirkt durch den Herstellungsprozess von Floatglas, bei dem eine Glasschmelze einseitig von einem Zinnbad benetzt wird, bewirken eine Verschiebung des Brewster-Winkels.

Die summarische Intensität des an der Vorderfläche der planparallelen Substratlage reflektierten vorderflächigen Messstrahlenbündels in der Auffangebene des ersten Sensors wird als vorderflächige summarische Referenzintensität erfasst. Die Lage des Messlichtschwerpunkts des vorderflächigen Messstrahlenbündels in der Auffangebene des ersten Sensors wird als erster Messlichtnullpunkt erfasst. Die summarische Intensität des an der Rückfläche der planparallelen Substratlage reflektierten rückflächigen Messstrahlenbündels in der Auffangebene des zweiten Sensors wird als rückflächige summarische Referenzintensität erfasst. Die Lage des Messlichtschwerpunkts des rückflächigen Messstrahlenbündels in der Auffangebene des zweiten Sensors wird als zweiter Messlichtnullpunkt erfasst.

Eine beispielsweise aus dem Herstellungsverfahren bedingte Verschiebung des Brewster-Winkels, die eine Verschiebung des ersten und/oder des zweiten Messlichtnullpunkts bewirkt, und/oder eine Veränderung der summarischen Intensität der Messstrahlenbündel im Verhältnis zueinander kann somit durch einen Korrekturwinkel beziehungsweise einen Korrekturfaktor berücksichtigt werden. Somit ist es möglich, bei der Vermessung einer beschichteten oder gestörten Vorderfläche einer Substratlage die Referenzwerte an der Rückfläche der Substratlage parallel mitzumessen, so dass Schwankungen der absoluten Intensität des Beleuchtungslichtbündels die Ergebnisse nicht beeinflussen.

In vorteilhafter Weise kann eine Abweichung oder Modifikation eines vermessenen optisch transparenten Bauteils von dem Referenzprüfkörper des Kalibrationsverfahrens nachfolgend in einfacher Weise durch Vergleich der vom ersten und optional vom zweiten Sensor erfassten summarischen Intensität von der vorderflächigen beziehungsweise rückflächigen summarischen Referenzintensität bestimmt werden. Insbesondere wird eine Modifikation durch eine geometrische Welligkeit und/oder durch eine Beschichtung mit abweichendem Brechungsindex zu einer abweichenden Brewster-Bedingung und somit zu summarischen Intensitäten führen, welche von der jeweils zugeordneten Referenzintensität abweicht.

In vorteilhafter Weise kann nachfolgend ferner eine dünne Beschichtung auf der optisch transparenten Substratlage dadurch erkannt werden, dass der geometrische Schwerpunkt des vorderflächigen Messstrahlenbündels in der Auffangebene des ersten Sensors aufgrund des modifizierten Brewster-Winkels vom geometrischen Messlichtnullpunkt abweicht.

Ausführungsbeispiele der Erfindung werden im Folgenden anhand von Zeichnungen näher erläutert.

Darin zeigen:
- Figur 1: schematisch den Strahlengang durch eine Beleuchtungseinheit, ein optisch transparentes Bauteil und eine Detektoreinheit,
- Figur 2: schematisch den Verlauf der an einem entschichteten Bauteil mit Oberflächenmodifikationsänderung gemessenen Reflektivität,
- Figur 3: schematisch den Verlauf der an einem entschichteten Bauteil mit geometrischer Welligkeit gemessenen Reflektivität,
- Figur 4: schematisch eine Vorrichtung zur Erfassung und Verarbeitung von Reflektivitätsmesswerten,
- Figur 5: schematisch die Kurvenverläufe der Parameter summarische Intensität, Winkellage des Messlichtschwerpunkts und Differenz der Anstiege von summarische Intensität und Winkellage Messlichtschwerpunkt in Abhängigkeit von einer einseitigen Beschichtungsdicke der Substratlage sowie
- Figur 6: schematisch die Kurvenverläufe der Parameter summarische Intensität, Winkellage des Messlichtschwerpunkts und Differenz der Anstiege von summarische Intensität und Winkellage Messlichtschwerpunkt in Abhängigkeit von einer geometrischen Welligkeit der Substratlage.

Einander entsprechende Teile sind in allen Figuren mit den gleichen Bezugszeichen versehen.

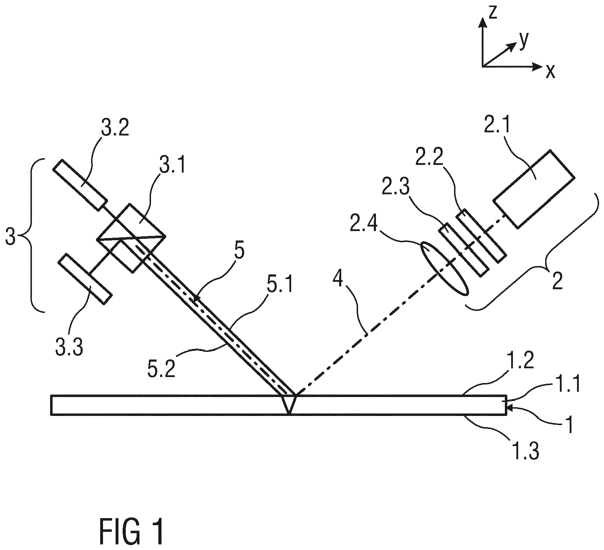

**Figur 1** zeigt schematisch den Strahlengang in einer Messvorrichtung zur Untersuchung eines optisch transparenten planparallelen Bauteils 1 mit dem erfindungsgemäßen Verfahren. Das Bauteil 1 ist schichtartig als Substratlage 1.1 aus einem optisch transparenten Substrat aufgebaut. Das Bauteil 1 weist mit der Vorderfläche 1.2 zur Messvorrichtung. In der Vorderfläche 1.2 liegen zueinander vertikal eine horizontale x-Achse x oder x-Richtung und eine in die Bildebene hineinweisende y-Achse y oder y-Richtung. Eine z-Achse z oder z-Richtung wird von der Flächennormalen auf der Vorderfläche 1.2 gebildet. Die planparallele Rückfläche 1.3 der Substratlage 1.1 ist von der Messvorrichtung abgewandt.

Die Messvorrichtung umfasst eine Beleuchtungseinheit 2, die das Bauteil 1 entlang einer Beleuchtungsstrahlrichtung 4 beleuchtet. Die Messvorrichtung umfasst ferner eine Detektoreinheit 3, die vom Bauteil 1 parallel zu einer Messstrahlrichtung 5 reflektiertes Licht auffängt. Die Beleuchtungseinheit 2 und die Detektoreinheit 3 sind in der xz-Einfallsebene jeweils im Brewster-Winkel der Substratlage 1.1 um die Flächennormale auf die Vorderfläche 1.2 angeordnet. Mit anderen Worten: die Messvorrichtung ist so ausgerichtet, dass die Beleuchtungsstrahlrichtung 4 und die Messstrahlrichtung 5 jeweils im Brewster-Winkel der Substratlage 1.1 relativ zur Flächennormalen der Vorderfläche 1.2 verlaufen und somit den doppelten Brewster-Winkel einschließen.

Entlang der y-Richtung, und somit entlang der Ausdehnung des linienförmigen Beleuchtungsabschnitts, ist das von der Beleuchtungseinheit 2 abgegebene Licht kollimiert.

Die Beleuchtungseinheit 2 umfasst entlang der optischen Achse nacheinander aufgefädelt eine Laserquelle 2.1, einen Linearpolarisator 2.2, einen Polarisationsdreher 2.3 sowie eine Zylinderlinse 2.4. Zwischen der Laserquelle 2.1 und dem Linearpolarisator 2.2 kann ein nicht näher dargestellter Strahlaufweiter angeordnet sein. Der Strahlaufweiter kann als variable Strahlaufweitungsoptik ausgebildet sein, die die telezentrische Linienlänge des Beleuchtungslichtbündels entlang der y-Richtung bestimmt. Der Polarisationsdreher 2.3 kann beispielsweise als magneto-optische Drehplatte ausgebildet sein.

Die Brechkraft der Zylinderlinse 2.4 ist so gewählt, dass die Brennlinie auf oder nahe der Vorderfläche 1.2 liegt. Somit bildet die Beleuchtungseinheit 2 auf der Vorderfläche 1.2 einen linienförmigen Beleuchtungsabschnitt in der Art einer Lichtstrecke scharf ab. Entsprechend der eindimensionalen numerischen Apertur der Zylinderlinse 2.4 wird in der xz-Einfallsebene ein Spektrum von Einfallswinkeln von Beleuchtungsstrahlen umfasst, die unterhalb und oberhalb des Neigungswinkels der Beleuchtungsstrahlrichtung 4 relativ zur Vorderfläche 1.2 liegen. In vorteilhafter Weise ist die numerische Apertur der Zylinderlinse 2.4 so gewählt, dass Beleuchtungsstrahlen aus einem Spektrum von Einfallswinkeln von einem Grad unterhalb des Brewster-Winkels bis einem Grad oberhalb des Brewster-Winkels auf die Vorderfläche 1.2 treffen. Es ist auch möglich, die numerische Apertur der Zylinderlinse 2.4 größer zu wählen, so dass Beleuchtungsstrahlen mit Einfallswinkeln von ± 3 Grad um den Brewster-Winkel auf die Vorderfläche 1.2 auftreffen. Jeder aus der Beleuchtungseinheit 2 auf die Vorderfläche 1.2 auftreffende Beleuchtungsstrahl verläuft durch einen Punkt der Brennlinie der Zylinderlinse 2.4 und ist zur Beleuchtungsstrahlenebene höchstens um den von der numerischen Apertur der Zylinderlinse 2.4 bestimmten Öffnungswinkel geneigt. Die Gesamtheit dieser Beleuchtungsstrahlen bildet das Beleuchtungsstrahlenbündel.

Das an der Vorderfläche 1.2 auftreffende Beleuchtungsstrahlenbündel wird im Allgemeinen, also beispielsweise für unpolarisiertes Licht oder elliptisch polarisiertes Licht, dem Reflexionsgesetz entsprechend zunächst als vorderflächiges Messstrahlenbündel 5.1 zur Detektoreinheit 3 reflektiert. Das Messstrahlenbündel 5.1 liegt im Wesentlichen parallel zur Messstrahlrichtung 5. Ebenso parallel hierzu, aber in entlang der x-Richtung versetzt liegt ein rückflächiges Messstrahlenbündel 5.2, das aus der Reflexion des einfallenden Beleuchtungsstrahlbündels an der Rückseite der Substratlage 1.1 entsteht. Der Versatz zwischen dem vorderflächigen und dem rückflächigen Messstrahlenbündel 5.1, 5.2 wird von der Dicke der Substratlage 1.1 bestimmt.

Die Detektoreinheit 3 weist eingangsseitig einen Strahlteiler 3.1 auf, mit dem das vorderflächige Messstrahlenbündel 5.1 und das rückflächige Messstrahlenbündel 5.2 getrennt werden. Der Strahlteiler 3.1 kann beispielsweise als ein halbseitig reflektierender Strahlteiler ausgebildet sein. Der Strahlteiler 3.1 kann auch als polarisationsabhängiger Strahlteilerwürfel ausgebildet sein, vor welchem entlang entweder des vorderflächigen Messstrahlenbündels 5.1 oder des rückflächigen Messstrahlenbündels 5.2 eine *λ*/4 Platte angeordnet ist.

Ferner weist die Detektoreinheit 3 einen ersten und einen zweiten lichtempfindlichen Sensor 3.2, 3.3 auf. Mittels des Strahlteilers 3.1 und optional mittels weiterer, aus dem Stand der Technik bekannter und nicht näher dargestellter abbildender optischer Elemente wird das vorderflächige Messstrahlenbündel 5.1 auf den ersten Sensor 3.2 und das rückflächige Messstrahlenbündel 5.2 auf den zweiten Sensor 3.3 abgebildet.

Die Sensoren 3.2, 3.3 wandeln Licht, insbesondere Licht in der von der Laserquelle 2.1 emittierten Wellenlänge, in ein elektrisches Signal um, das proportional zur summarischen Intensität des auf die Sensorfläche treffenden Lichts ist. Die Sensorflächen der Sensoren 3.2, 3.3 sind flächig so ausgebildet und angeordnet, dass mindestens ein durch die numerische Apertur der Zylinderlinse 2.4 begrenztes Beleuchtungsstrahlenbündel vollständig aufgefangen wird. Bevorzugt weisen die numerischen Aperturen der Sensoren 3.2, 3.3 den doppelten Wert der Beleuchtungsapertur auf. Somit ist sichergestellt, dass ein Reflex auch bei einer leichten Verkippung der Oberflächen 1.2, 1.3 im Auffangbereich des jeweiligen Sensors 3.2, 3.3 verbleibt, solange die Verkippung unter der Hälfte des durch die numerische Apertur der Zylinderlinse 2.4 bestimmten Öffnungswinkels des Beleuchtungsstrahlenbündels bleibt.

Bleibt die Anordnung der Beleuchtungseinrichtung 2 und der Detektionseinrichtung 3 zueinander und relativ zur Substratlage 1.1 unverändert, so lässt sich bei konstanter Ausgangslichtleistung der Laserquelle 2.1 somit über die Sensoren 3.2, 3.3 die Reflektivität der Oberflächen 1.2, 1.3 für Licht bestimmen, das unter dem Brewster-Winkel des Substrats einfällt.

Es ist bekannt, dass parallel zur Einfallsebene polarisiertes Licht theoretisch reflexfrei transmittiert wird, wenn es unter dem Brewster-Winkel auf ein optisch transparentes Material trifft. Daher ist theoretisch bei planparalleler, entsprechend der Brewster-Bedingung ausgerichteter Substratlage 1.1 eine minimale summarische Intensität der auf jeweils einen Sensor 3.2, 3.3 gelenkten Messstrahlenbündels 5.1, 5.2 zu erwarten. Eine von Null geringfügig abweichende summarische Intensität ist dabei durch den Öffnungswinkel des Beleuchtungsstrahlenbündels bedingt, der das Auftreffen von Beleuchtungsstrahlen auf den Oberflächen 1.2, 1.3 unter einem vom Brewster-Winkel geringfügig abweichenden Einfallswinkel zulässt, welche somit auch bei parallel-polarisiertem Licht teilweise reflektiert werden.

Mit der Messvorrichtung sind Abweichungen von der Planparallelität der Substratlage 1.1 somit besonders leicht detektierbar, wenn mittels des Linearpolarisators 2.2 zur Einfallsebene parallel polarisiertes Licht erzeugt wird. Ein Kalibrationsverfahren zur Einstellung der Brewster-Bedingung sowie zur Ausrichtung der Sensoren 3.2, 3.3 in Abhängigkeit vom Versatz der Messstrahlenbündel 5.1, 5.2 resultierend aus der Dicke der Substratlage 1.1 wird in einem nachfolgenden Abschnitt noch genauer beschrieben.

Nach Ausführung einer solchen Kalibration wird bei parallel-polarisiertem Licht ein Referenzprüfkörper vermessen, der bezüglich der Schichtdicke, der Planparallelität und bezüglich des Brechungsindex der Substratlage 1.1 spezifikationsgemäß ausgeführt ist. Die summarischen Intensitäten der Messstrahlenbündel 5.1, 5.2 werden als Referenzwerte über die Sensoren 3.2, 3.3 erfasst, zur Gewinnung einer höheren statistischen Sicherheit vorzugsweise mehrfach und an verschiedenen Positionen durch Verschiebung des Referenzprüfkörpers parallel zur xy-Ebene.

Nachfolgend werden Prüflinge, also Bauelemente mit ungewisser Einhaltung der Spezifikation, demselben Messverfahren unterzogen. Dabei ist es im Allgemeinen vorteilhaft, einen Prüfling mehrfach zu messen, indem Messungen entlang einer Messspur, beispielsweise durch horizontales Verfahren des Prüflings in x-Richtung, wiederholt werden. Weicht der Prüfling von den spezifizierten Vorgaben ab, kann dies anhand der Messwerte an den Sensoren 3.2, 3.3 wie nachfolgend beschrieben detektiert werden.

Eine geometrische Welligkeit der Substratlage 1.1 bewirkt eine geringfügige, näherungsweise periodische Richtungsänderung der Oberflächennormalen mindestens einer Oberfläche 1.2, 1.3 mit relativ großer Ortsperiode, die typischerweise im Bereich einiger Millimeter liegt. In unmittelbarer Nähe zu einem Wellenberg oder zu einem Wellental ist hierbei die Brewster-Bedingung näherungsweise erfüllt, so dass keine oder nur eine geringe Abweichung zwischen den an den Sensoren 3.2, 3.3 gemessenen Werten einerseits und den am Referenzprüfkörper ermittelten Referenzwerten andererseits bestimmt wird. Fällt jedoch das Beleuchtungsstrahlenbündel auf einen Übergang zwischen einem Wellenberg und einem Wellental, so weicht der Einfallswinkel an dieser Position einer gewellten Oberfläche 1.2, 1.3 vom Brewster-Winkel ab.

Bei kleinen Änderungen des Einfallswinkels, wie sie bei geometrischen Welligkeiten mit einer Ortsperiode im Bereich einiger Millimeter bis Zentimeter zu erwarten sind, verschiebt sich der Auslöschungsbereich des Brewster-Winkels innerhalb des Messstrahlenbündels je nach Richtung des durch die geometrische Welligkeit bewirkten Anstiegs oder Abfalls der Oberfläche 1.2, 1.3 nur geringfügig hin zu höheren beziehungsweise niedrigeren Winkeln basierend auf dem Reflexionsgesetz. Bei einer parabelförmigen Näherung der Reflexionsgradkurve im Bereich um den Brewster-Winkel beschreibt die Änderung der summarischen Intensitätswerte ebenfalls eine parabelförmige Abhängigkeit. Bildet man das Verhältnis der Anstiege von summarischer Intensität und Winkellage des Intensitätsschwerpunkts, so ergibt sich eine lineare Abhängigkeit mit positivem Anstieg, wobei dieser Anstieg unabhängig davon ist, ob die Substratlage beschichtet ist oder nicht.

Bei einer Messspur, die senkrecht oder schräg zur geometrischen Welligkeit der Substratlage 1.1 liegt, ist daher bei ausreichend feiner Abtastung, beispielsweise mit Messabständen von etwa 100µm, eine näherungsweise periodische Schwankung mindestens eines summarischen Intensitätswerts eines Sensors 3.2, 3.3 zu beobachten. Somit kann mit dem beschriebenen Verfahren eine geometrische Welligkeit der Substratlage 1.1 durch einfache Signalauswertung der Intensität und der Verschiebung des Positionssignals auf den Sensoren 3.2, 3.3 als abgegriffene elektrische Spannungsschwankungen ermittelt werden. Diese elektrischen Spannungen lassen sich, da es sich um nur eindimensionale Signale handelt, sehr leicht erfassen und auswerten. Somit ist eine Prüfung auf Abweichungen von der Planparallelität der Substratlage 1.1 erheblich leichter und schneller möglich als bei bildbasierten Verfahren nach dem Stand der Technik, so dass auch große Flächen mit geringem Zeitaufwand geprüft werden können. Beispielsweise ist für die Sensoren 3.2, 3.3 eine Abtastfrequenz von bis zu 100 Kilohertz möglich, so dass sich bei einer gewünschten Ortsauflösung von 100 Mikrometern für eine geradlinige Messspur eine Vortriebsgeschwindigkeit eines Flachglasprüflings von bis zu 10 Metern pro Sekunde ergibt.
Bei einer Ausführungsform der Erfindung wird nur das vorderflächige Messstrahlenbündel 5.1 mittels des ersten Sensors 3.2 erfasst und ausgewertet. Mit dieser Ausführungsform kann zwar eine Welligkeit nur der Vorderfläche 1.2 der Substratlage 1.1 erfasst werden. Dies reicht jedoch als Qualitätsparameter für viele Untersuchungen aus. In vorteilhafter Weise kann bei dieser Ausführungsform die Auswertung vereinfacht werden, da nur zwei Signale zu untersuchen sind. Ferner ist es möglich, den Strahlteiler 3.1 und/oder den zweiten Sensor 3.3 einzusparen. Es ist auch möglich, den Strahlteiler 3.1 und die damit unvermeidlich einhergehende Dämpfung des vorderflächigen Messstrahlenbündels 5.1 zu umgehen, so dass empfindlichere Messungen möglich werden.

Neben einer geometrischen Welligkeit der Substratlage 1.1 wirkt sich auch eine vorderflächig auf der Substratlage 1.1 liegende, hinreichend dicke Schicht auf die Intensität des reflektierten vorderflächigen Messstrahlenbündels 5.1 aus. Aus dem Stand der Technik ist bekannt, dass der Brewster-Winkel für ein beschichtetes Bauteil 1 verändert wird, wenn auf der Substratlage 1.1 eine Schicht mit einem vom Brechungsindex der Substratlage 1.1 abweichenden Brechungsindex aufgetragen wird. Wurden die Beleuchtungseinheit 2, die Detektoreinheit 3 und das Bauteil 1 so angeordnet und kalibriert, dass die Brewster-Bedingung bezüglich des Substratmaterials erfüllt ist, so ist die Brewster-Bedingung für ein solches beschichtetes Bauteil 1 nicht erfüllt. Daher wird die Reflexion von parallel polarisiertem, im Brewster-Winkel des Substrats auftreffendem Licht nicht unterdrückt. Somit wird am ersten Sensor 3.2 eine größere summarische Intensität für das vorderflächig reflektierte Messstrahlenbündel 5.1 gemessen als bei einem unbeschichteten Bauteil 1, das nur die Substratlage 1.1 umfasst. Das erfindungsgemäße Verfahren ist daher auch geeignet, unerwünschte Beschichtungen auf einer Substratlage 1.1 zu erkennen, sofern die Dicke der unerwünschten Schicht und/oder der Unterschied zwischen den Brechungsindizes der Substratlage 1.1 und dieser unerwünschten Schicht so groß ist, dass die resultierende Änderung im Brewster-Winkel des beschichteten Bauteils 1 eine Auslenkung der Reflexauslöschung über den Auffangbereich des ersten Sensors 3.2 hinaus bewirkt. Anhand des summarischen Intensitätswertes lassen sich grob die Schichtdicke beziehungsweise die Schichtzusammensetzung der Beschichtung ableiten. Ist das Verhältnis der summarischen Intensität der beschichteten Substratseite zur unbeschichteten Substratseite kleiner als 50, so handelt es sich mit großer Wahrscheinlichkeit um eine dielektrische Einfachschicht. Ist das Verhältnis deutlich größer, ist von einer metallischen Schicht oder von einem Schichtstapel auszugehen. Bei metallischen Schichten kann bei einer Schichtdicke von weniger als 100 Nanometern einem summarischen Intensitätswert eine Schichtdicke zugeordnet werden.

Störungen durch unerwünschte Beschichtungen auf der Substratlage 1.1 lassen sich von Störungen durch eine geometrische Welligkeit der Substratlage 1.1 durch simultane Auswertung der summarischen Intensitäten des vorderflächigen und des rückflächigen Messstrahlenbündels 5.1, 5.2, und somit durch Auswertung der Signale des ersten und des zweiten Sensors 3.2, 3.3 unterscheiden. Ein ungleichmäßiger Abtrag einer unerwünschten vorderflächigen Schicht führt entlang einer Messspur zu einer Variation des Signals des ersten Sensors 3.2, während das Signal des zweiten Sensors 3.3 näherungsweise konstant bleibt.

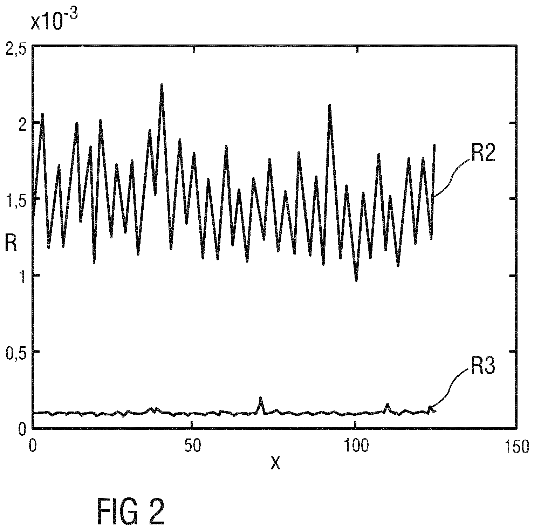

**Figur 2** zeigt schematisch einen ersten Messschrieb R2 korrespondierend zum Signal des ersten Sensors 3.2 und einen zweiten Messschrieb R3 korrespondierend zum Signal des zweiten Sensors 3.3 für einen solchen ungleichmäßigen Abtrag.

Geometrische Abweichungen, beispielsweise Welligkeiten, Kratzer oder Riefen der Substratlage 1.1 führt dagegen zu einer starken Änderung der Winkellage sowohl der Vorderfläche 1.2 als auch der Rückfläche 1.3 relativ zur Beleuchtungsstrahlrichtung 4 und resultiert daher in einer im Wesentlichen synchronen Variation der Signale sowohl des ersten als auch des zweiten Sensors 3.2, 3.3.

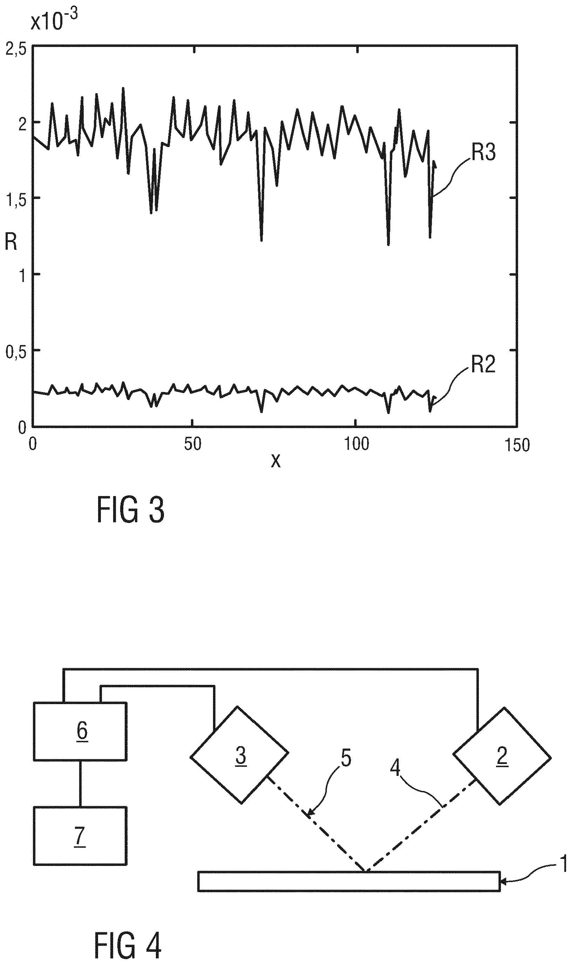

**Figur 3** zeigt schematisch einen ersten Messschrieb R2 korrespondierend zum Signal des ersten Sensors 3.2 und einen zweiten Messschrieb R3 korrespondierend zum Signal des zweiten Sensors 3.3 entlang einer Messspur für eine solche geometrische Abweichungen der Substratlage 1.1.

In einer weiteren Ausführungsform der Erfindung ist der erste Sensor 3.2 als ortsauflösender lichtempfindlicher Sensor ausgebildet. Beispielsweise kann der erste Sensor 3.2 als positionsempfindlicher Detektor (position sensitive device, PSD) ausgebildet sein. Derartige, aus dem Stand der Technik bekannte positionssensible Detektoren liefern neben einem summarischen Intensitätssignal, das proportional zur gesamten auf die Detektoroberfläche auftreffenden Lichtstrahlung ist, zwei Positionssignale, die den Schwerpunkt der auftreffenden Lichtstrahlung in zwei zueinander orthogonalen Positionskoordinaten angibt.

Ist eine Substratlage 1.1 mit einer nur sehr dünnen vorderflächigen Schicht mit abweichendem Brechungsindex versehen, so wird der Einfallswinkel mit minimalem Reflexionsgrad für das beschichtete Bauelements 1 von dem Brewster-Winkel der Substratlage 1.1 nur geringfügig abweichen. Insbesondere kann diese Abweichung so gering sein, dass aufgrund des Öffnungswinkels des Beleuchtungsstrahlenbündels um die Beleuchtungsstrahlrichtung 4 ein Teil des von der Beleuchtungseinheit 2 emittierten Lichts den Einfallswinkel mit minimalem Reflexionsgrad einschließt. Dieser Teil des Beleuchtungsstrahlenbündels wird in der Reflexion stark gedämpft und führt somit zu einer Verschiebung des Messlichtschwerpunkts in der Auffangebene des ersten Sensors 3.2.

Bedingt durch die flächige Ausdehnung des ersten Sensors 3.2 und den Öffnungswinkel des Beleuchtungsstrahlenbündels um die Beleuchtungsstrahlrichtung 4 führt daher eine sehr dünne Schicht über der Substratlage 1.1 zu einer Anhebung des Reflexionsgrads sowie zu einer Winkelauslenkung, die innerhalb des Auffangbereichs des ersten Sensors 3.2 bleibt. Somit verändert sich sowohl die summarische Intensität, die vom ersten Sensor 3.2 als elektrisches Signal zurückgegeben wird, als auch die geometrische Lage des Intensitätsschwerpunkts auf der Oberfläche des ersten Sensors 3.2. An einem ortsauflösenden Sensor 3.2 kann dieser Intensitätsschwerpunkt ermittelt werden. Ist der Sensor 3.2 beispielsweise als herkömmliche PSD ausgebildet, so kann der Schwerpunkt aus dem Positionssignal der PSD leicht ermittelt werden. In vorteilhafter Weise kann mit dieser Ausführungsform der Erfindung somit auch eine sehr dünne störende Schicht oberhalb der Substratlage 1.1 erkannt werden. Zudem kann eine solche sehr dünne Schicht leicht von anderen Oberflächenmodifikationen unterschieden werden, da sie im Gegensatz zu einer geometrischen Welligkeit oder im Gegensatz zu einer dicken störenden Schicht die am zweiten Sensor 3.3 gemessene summarische Intensität im Wesentlichen unverändert lässt.

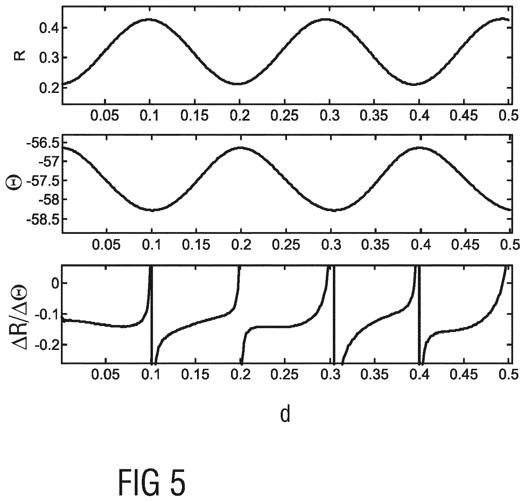

Dünne dielektrische Einfachschichten, insbesondere solche mit einer Dicke von weniger als 150 Nanometern, lassen sich mit Hilfe eines ortsauflösend messenden Sensors 3.2 näherungsweise quantifizieren. Beispielhaft sind in **Figur 5** die aus der summarischen Intensität ermittelte Reflektivität R und die Winkellage θ des Intensitätsschwerpunkts in Abhängigkeit von der Schichtdicke d der Einfachschicht aufgetragen. Der Öffnungswinkel des Beleuchtungsstrahlenbündels und die numerische Apertur des Messstrahlenbündels betragen in diesem Beispiel je ±3°. Die Beleuchtungslichtwellenlänge ist gegeben mit 532 Nanometern. Die Beschichtung besitzt einen Brechungsindex, der 0,05 größer ist als der Brechungsindex der Substratlage 1.1. Deutlich ist der sinusförmige Verlauf der Reflektivität R und der Winkellage θ zu erkennen. Bei einer Schichtdicke d oberhalb von etwa 100 Nanometern werden die Parameter Reflektivität R und Winkellage θ des Intensitätsschwerpunkts mehrdeutig.

Für Schichten dünner als 100 Nanometer kann in diesem Beispiel die Schichtdicke d aus den Absolutwerten für die Reflektivität R und die Winkellage θ des Intensitätsschwerpunkts bestimmt werden.

Jedoch kann eine geometrische Welligkeit der Substratlage 1.1 zu großen Messfehlern bei der Bestimmung der Beschichtungsparameter anhand von Absolutwerten führen. Für scannende Messungen kann dieser Einfluss reduziert werden. Unter der Annahme, dass eine Beschichtung mit einer Schichtdicke d von 50 Nanometern hinsichtlich der Beschichtungsdicke um ±10% schwanken würde, würde eine solche Messung zu einer Signalschwankung für den Wert der Reflektivität R im Bereich 0,305..0,338 und für den Wert der Winkellage θ des Intensitätsschwerpunkts im Bereich -57,38° ... -57,62° führen. Dabei bleibt das Verhältnis von Reflektivität R zur Winkellage θ des Intensitätsschwerpunkts im Bereich der auswertbaren Schichtdicke d nahezu konstant bei Werten zwischen - 0,135 1/° bis-0,139 1/°.

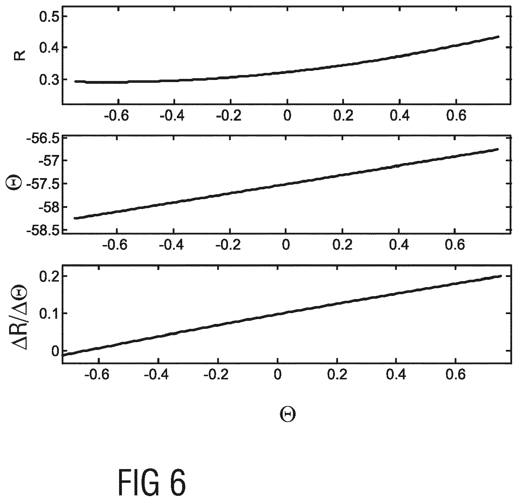

**Figur 6** zeigt die Abhängigkeit der Parameter Reflektivität R und Winkellage θ des Intensitätsschwerpunktes von einer Winkelverschiebung, bewirkt durch eine geometrische Welligkeit der Substratlage 1.1. Für das oben beschriebene Beispiel ist eine Winkelverschiebung im Bereich von -0,75° bis +0,75° angenommen. Der Verlauf der Reflektivität R beschreibt eine nach oben, also zu höheren Reflektivitätswerten hin, geöffnete Parabel, während die Winkellage θ des Intensitätsschwerpunkts sich linear verhält. Das Verhältnis der Reflektivität R zur Winkellage θ ist durch eine Gerade mit positivem Anstieg charakterisiert. Eine Winkelverschiebung des Intensitätsschwerpunkts von ca. ±0,1°, wie sie durch eine Schwankung der Schichtdicke d von ±10% verursacht wird, führt durch geometrische Welligkeit bedingt zu einem Anstieg des Verhältnisses von Reflektivität R zu Winkellage θ von 0,08 1/°bis 0,11 1/°. Durch Regression des linearen Anstiegs der Messdaten lässt sich der Einfluss der geometrischen Welligkeit extrahieren und aus den Messdaten herausfiltern.

Voraussetzung für die Erkennung einer Auslenkung der Reflexauslöschung bei geändertem Brewster-Winkel ist die Kalibration der Anordnung von einem ungestörten, also planparallelen und unbeschichteten Bauteil 1, der Beleuchtungseinheit 2 und der Detektoreinheit 3 dergestalt, dass die Lage der Reflexauslöschung auf einem flächig ausgedehnten ersten Sensor 3.2 bei ungestörter Substratlage 1.1 bekannt ist. Dazu wird wie nachfolgend beschrieben ein Kalibrationsverfahren durchgeführt, bei dem als Bauteil 1 eine eigens spezifikationsgemäß hergestellte planparallele Platte aus Substratmaterial oder alternativ der zu untersuchende Glasprüfling selbst als Referenzprüfkörper verwendet wird.

Zur Durchführung des Kalibrationsverfahrens ist der zweite Sensor 3.3 als ortsauflösender Sensor ausgebildet, beispielsweise als PSD oder vorzugsweise als Zeilenkamera. Zeilenkameras mit zeilenartig linear angeordneten, unabhängig auslesbaren lichtempfindlichen Elementen sind aus dem Stand der Technik bekannt.

Sind sowohl die Beleuchtungsstrahlrichtung 4 als auch die Messstrahlrichtung 5 symmetrisch und relativ zur Flächennormalen der Vorderfläche 1.2 näherungsweise im Brewster-Winkel des Substrats geneigt, so wird parallel polarisiertes Licht an der Rückfläche 1.3 nicht oder nur sehr schwach reflektiert, was die Vermessung des rückflächigen Messstrahlenbündels 5.2 erschwert. Für das Kalibrationsverfahren wird daher mittels des Polarisationsdrehers 3 eine elliptische Polarisation des Beleuchtungsstrahlenbündels eingestellt und somit die Reflexauslöschung durch die Brewsterwinkelbedingung aufgehoben.

Das nunmehr stärker reflektierte rückflächige Messstrahlenbündel 5.2 wird über den Strahlteiler 3.1 auf den zweiten Sensor 3.3 gelenkt. Die Schwerpunktlage der Intensitätsverteilung des Messstrahlenbündels 5.2 auf der Auffangebene des zweiten Sensors 3.3 wird ermittelt. Für einen als Zeilenkamera ausgebildeten zweiten Sensor 3.3 ergibt sich die Schwerpunktlage aus der gewichteten Mittelung der Koordinaten der unabhängig auslesbaren lichtempfindlichen Elemente, wobei die Wichtung für ein einzelnes Element mit dem jeweils ausgelesenen Intensitätswert erfolgt. Weitere Verfahren zur Bestimmung der Schwerpunktlage einer flächig verteilten Lichtintensität sind aus dem Stand der Technik bekannt. Zeilenkameras bieten gegenüber PSDs hierbei den Vorteil einer höheren Ortsauflösung bei der Ermittlung der Schwerpunktlage. Da die Kalibration einmalig vor einem Prüfvorgang oder vor einer Folge gleichartiger Prüfvorgänge ausgeführt wird, ist ein höherer Zeitaufwand für das Auslesen und Auswerten eines Vektors von Belichtungswerten an einer Zeilenkamera hinnehmbar. Sodann wird die Winkellage der Beleuchtungseinheit 2, der Detektoreinheit 3 und des Bauteils 1 so eingestellt, dass eine zentrale Schwerpunktlage des vom zweiten Sensor 3.3 aufgefangenen rückflächigen Messstrahlenbündels 5.2 erreicht ist. Für einen als Zeilenkamera ausgebildeten zweiten Sensor 3.3 wird somit das Messstrahlenbündel 5.2 mittig auf Zeilenkamera eingestellt.

Anschließend wird die Schwerpunktlage des vorderflächigen Messstrahlenbündels 5.1 auf dem ersten Sensor 3.2 ermittelt und als Nullpunktlage des Oberflächenreflexes festgehalten. Diese Nullpunktlage entspricht dem geometrischen Ort auf dem ersten Sensor 3.2, auf dem bei parallel polarisiertem Licht die Reflexauslöschung durch die Brewsterwinkelbedingung bewirkt und abgebildet wird, wenn ein planparalleles Bauteil 1 ohne störende vorderflächige Schicht untersucht wird. Da der Parallelversatz der Messstrahlenbündel 5.1, 5.2 von der Dicke der Substratlage 1.1 bestimmt wird, hängt auch die Nullpunktlage von der Dicke der Substratlage 1.1 ab.

Für Prüflinge mit bekannter Dicke und mit bekanntem Brechungsindex, und somit auch bekanntem Brewster-Winkel der Substratlage 1.1, können die beschriebenen Kalibrierungsschritte entfallen. Hier ist vielmehr die Fixierung beziehungsweise die Wiederverwendung von zuvor bestimmten Winkelverhältnissen und von einer Nullpunktlage möglich. Insbesondere können für ein zu prüfendes Teilesortiment, beispielsweise Floatglas fest vorgegebener Dicke, diese Einstellungen fixiert oder vorgegeben werden.

Nach erfolgter Kalibration wird die ursprüngliche Einstellung des Polarisationsdrehers 2.3 wiederhergestellt, so dass im Beleuchtungsstrahlenbündel wieder zur Einfallsebene parallel polarisiertes Licht auf das Bauteil 1 trifft. Eine Störung durch eine dünne oberflächliche Schicht kann nunmehr dadurch erkannt werden, dass der geometrische Schwerpunkt des vorderflächigen Messstrahlenbündels 5.1 auf der Auffangebene des ersten Sensors 3.2 von der kalibrierten Nullpunktlage abweicht.

Ferner wird mit parallel polarisiertem Licht am Referenzprüfkörper eine summarische Referenzintensität für den ersten und für den zweiten Sensor 3.2, 3.3 ermittelt. Eine Störung durch eine dicke oberflächliche Schicht bewirkt durch Änderung des Brewster-Winkels für das gesamte Bauteil 1 eine Auslenkung der Reflexauslöschung über die Auffangebene des ersten Sensors 3.2 hinaus und somit eine im Vergleich zur summarischen Referenzintensität erhöhte summarische Intensität am ersten Sensor 3.2.

Aus dem Verhältnis der summarischen Intensität bei Störung durch eine oberflächliche Schicht zur summarischen Intensität ohne Störung kann der Reflexiongrad für parallel polarisiertes Licht bei Störung ermittelt werden. Die Abhängigkeit dieses Reflexionsgrads von der Schichtdicke und von den Brechungswinkeln an den Grenzflächen Luft - oberflächliche Schicht, oberflächliche Schicht - Substratlage 1.1 ist beispielsweise aus der Druckschrift DE 10 2007 043 937 B4, [0009] bis [0019] bekannt. Der Einfallswinkel des Messstrahlenbündels ist aus der Kalibrierung als der Brewster-Winkel des Substrats bekannt. Ist das Material der oberflächlichen Schicht hinsichtlich seines Brechungsindex bekannt, so können alle Brechungswinkel an den Grenzflächen ermittelt werden. Daher kann aus der bekannten Abhängigkeit des Reflexionsgrads von der Schichtdicke und von diesen Brechungswinkeln die Schichtdicke selbst bestimmt werden.

Für dünne oberflächliche Schichten ändert sich, wie bereits dargelegt, die summarische Intensität des vorderflächigen Messstrahlenbündels 5.1 im Vergleich zur summarischen Referenzintensität nur geringfügig. Jedoch lässt sich die Änderung des Brewster-Winkels durch die oberflächliche Schicht durch die Abweichung der Schwerpunktlage des vorderflächigen Messstrahlenbündels 5.1 von der Nullpunktlage bestimmen. Für oberflächliche Schichten mit bekanntem Brechungsindex lässt sich die Änderung des Brewster-Winkels in Abhängigkeit von der Schichtdicke experimentell ermitteln. Ein Verfahren hierfür ist beispielsweise aus der Druckschrift DE 10 2007 043 937 B4, [0009] bis [0019] bekannt, deren diesbezüglicher Offenbarungsgehalt in den Offenbarungsgehalt dieser Anmeldung aufgenommen wird. Somit lässt sich durch Verwendung eines ortsauflösenden ersten Sensors 3.2, mit dem die Verschiebung des geometrischen Schwerpunkts des vorderflächigen Messstrahlenbündels 5.1 aus der Nullpunktlage und somit die Änderung des Brewster-Winkels durch die oberflächliche Schicht bestimmt werden kann, die zu dieser Änderung des Brewster-Winkels korrespondierende Schichtdicke ermitteln.

**Figur 4** zeigt schematisch eine Vorrichtung zur Durchführung des erfindungsgemäßen Verfahrens. Die Vorrichtung umfasst eine Beleuchtungseinheit 2 und eine Detektoreinheit 3. Die Vorrichtung umfasst ferner eine Datenverarbeitungseinheit 6 und einen hiermit gekoppelten Datenspeicher 7. Die Datenverarbeitungseinheit 6 steuert die Beleuchtungseinheit 2, insbesondere die Abgabe von Laserlicht durch die Laserquelle 2.1 und die Ausrichtung des Polarisationsdrehers 2.3. Die Datenverarbeitungseinheit 6 ist ferner mit der Detektoreinheit 3 gekoppelt und empfängt von dieser Signale der Sensoren 3.2, 3.3, insbesondere summarische Intensitäten und/oder Positionssignale, die die geometrische Verteilung der Messstrahlenbündel 5.1, 5.2 auf den korrespondierenden Sensoren 3.2, 3.3 beschreiben. Die Datenverarbeitungseinheit 6 legt summarische Referenzintensitätswerte, die an einem Referenzprüfkörper gemessen wurden, und/oder die Nullpunktposition für den ersten Sensor 3.2 auf dem Datenspeicher 7 ab und vergleicht fortlaufend gemessene summarische Intensitätswerte und optional eine fortlaufend gemessene Schwerpunktlage des Messstrahlenbündels 5.1 auf dem ersten Sensor 3.2 mit den gespeicherten Referenzwerten.

### BEZUGSZEICHENLISTE

- 1: Bauteil
- 1.1: Substratlage
- 1.2: Vorderfläche
- 1.3: Rückfläche
- 2: Beleuchtungseinheit
- 2.1: Laserquelle
- 2.2: Linearpolarisator
- 2.3: Polarisationsdreher
- 2.4: Zylinderlinse
- 3: Detektoreinheit
- 3.1: Strahlteiler
- 3.2: erster Sensor
- 3.3: zweiter Sensor
- 4: Beleuchtungsstrahlrichtung
- 5: Messstrahlrichtung
- 5.1: vorderflächiges Messstrahlenbündel
- 5.2: rückflächiges Messstrahlenbündel
- 6: Datenverarbeitungseinheit
- 7: Datenspeicher

- R: Reflektivität
- R2: erster Messschrieb
- R3: zweiter Messschrieb

- θ: Winkellage
- d: Schichtdicke

## Patentansprüche

1. Verfahren zur Erkennung von Modifikationen an einer Substratlage (1.1) aus einem optisch transparenten Substrat, wobei auf mindestens eine Oberfläche (1.2, 1.3) der Substratlage (1.1) mittels einer Beleuchtungseinheit (2) ein Beleuchtungsstrahlenbündel in einem linienförmigen Beleuchtungsabschnitt fokussiert wird, wobei das Beleuchtungsstrahlenbündel längs des Beleuchtungsabschnitts kollimiert und in einer Einfallsebene in einem halben Öffnungswinkel von zwischen einem und drei Grad symmetrisch um den Brewster-Winkel des Substrats angeordnet ist und zur Einfallsebene parallel polarisiert ist und wobei die summarische Intensität mindestens eines an einer Oberfläche (1.2, 1.3) der Substratlage (1.1) reflektierten Messstrahlenbündels (5.1, 5.2) mittels einer Detektoreinheit (3) erfasst und mit mindestens einer an einem Referenzprüfkörper gemessenen summarischen Referenzintensität verglichen wird.

2. Verfahren nach Anspruch 1,
**dadurch gekennzeichnet, dass** mindestens ein geometrischer Messlichtschwerpunkt einer Intensitätsverteilung eines an einer Oberfläche (1.2, 1.3) des Bauteils (1) reflektierten
Messstrahlenbündels (5.1, 5.2) in der Detektoreinheit (3) mit einem ortsauflösenden Sensor (3.2, 3.3) erfasst und mit einem an einem Referenzprüfkörper gemessenen geometrischen Messlichtnullpunkt verglichen wird.

3. Verfahren nach Anspruch 2,
**dadurch gekennzeichnet, dass** als Referenzprüfkörper eine unbeschichtete Substratlage (1.1) gewählt wird und aus dem Verhältnis der summarischen Intensität mindestens eines Messstrahlenbündels (5.1, 5.2) zu einer korrespondierenden summarischen Referenzintensität sowie aus der Verschiebung des geometrischen Schwerpunkts der Intensitätsverteilung mindestens eines Messstrahlenbündels (5.1, 5.2) relativ zum korrespondierenden geometrischen Messlichtnullpunkt die Dicke einer Beschichtung einer einseitig oder beidseitig beschichteten Substratlage (1.1) unter Verwendung des Zusammenhangs für ein theoretisches Reflexionsgradminimum bei einer Vielstrahlinterferenz ermittelt wird.

4. Verfahren nach einem der vorangehenden Ansprüche,
**dadurch gekennzeichnet, dass** simultan die summarische Intensität eines an einer Vorderfläche (1.2) der Substratlage (1.1) reflektierten vorderflächigen Messstrahlenbündels (5.1) und die summarische Intensität eines an einer Rückfläche (1.3) der Substratlage (1.1) reflektierten rückflächigen Messstrahlenbündels (5.2) erfasst werden.

5. Verfahren nach Anspruch 4,
**dadurch gekennzeichnet, dass** der geometrische Schwerpunkt der überlagerten Intensitätsverteilungen des vorderflächigen Messstrahlenbündels (5.1) und des rückflächigen Messstrahlenbündels (5.2) erfasst wird.

6. Verfahren nach Anspruch 4 oder 5,
**dadurch gekennzeichnet, dass** aus dem Verhältnis der summarischen Intensität eines an einer ersten Oberfläche (1.2, 1.3) der Substratlage (1.1) reflektierten Messstrahlenbündels (5.1, 5.2) zur summarischen Intensität eines an einer gegenüberliegenden zweiten Oberfläche (1.2, 1.3) der Substratlage (1.1) reflektierten Messstrahlenbündels (5.1, 5.2) der Beschichtungszustand der ersten Oberfläche (1.2, 1.3) ermittelt wird, wobei aus einem Verhältnis von kleiner als fünfzig eine Beschichtung der ersten Oberfläche mit einer dielektrischen Einfachschicht ermittelt wird.

7. Verfahren nach einem der vorangehenden Ansprüche,
**dadurch gekennzeichnet, dass** der linienförmige Beleuchtungsabschnitt in einer vorbestimmten Messspur über das Bauteil (1) bewegt wird und entlang der Messspur in vorbestimmten zeitlichen oder vorbestimmten örtlichen Abständen Messungen der summarischen Intensität und/oder des geometrischen Schwerpunkts der Intensitätsverteilung mindestens eines Messstrahlenbündels (5.1, 5.2) vorgenommen werden.

8. Verfahren nach Anspruch 7,
**dadurch gekennzeichnet, dass** entlang der Messspur Änderungen der summarischen Intensität als abhängige statistische Variable und Änderungen des geometrischen Schwerpunkts der Intensitätsverteilung des mindestens einen Messstrahlenbündels (5.1, 5.2) als unabhängige statistische Variable gemessen werden und ein linearer Regressionskoeffizient zwischen der Änderung des geometrischen Schwerpunkts der Intensitätsverteilung und der Änderung der summarischen Intensität ermittelt wird, wobei ein statistisch signifikant von Null abweichender positiver Regressionskoeffizient einer geometrischen Welligkeit der Substratlage (1.1) zugeordnet und wobei ein statistisch nicht signifikant von Null abweichender Regressionskoeffizient einer Modifikation in der Beschichtung der Substratlage (1.1) zugeordnet wird.

9. Messvorrichtung zur Durchführung eines Verfahrens nach einem der Ansprüche 1 bis 3, umfassend
- eine in einer Beleuchtungsstrahlrichtung (4) ausgerichtete Beleuchtungseinheit (2) mit in Beleuchtungsstrahlrichtung (4) aufeinanderfolgend angeordnet einer Laserquelle (2.1), einem Linearpolarisator (2.2), einem Polarisationsdreher (2.3) und einer Zylinderlinse (2.4) zur Erzeugung eines längs der Zylinderachse der Zylinderlinse (2.4) kollimierten Beleuchtungslichtbündels sowie
- eine in einer Messstrahlrichtung (5) ausgerichtete Detektoreinheit (3) mit einem ersten lichtempfindlichen ortsauflösenden Sensor (3.2), der zur Messung der summarischen Intensität eines Messstrahlenbündels (5.1, 5.2) vorgesehen ist,
wobei der Winkel zwischen Beleuchtungsstrahlrichtung (4) und Messstrahlrichtung (5) an den doppelten Brewsterwinkel des Substrats anpassbar ist und wobei die Brechkraft der Zylinderlinse (2.4) so gewählt ist, dass das Beleuchtungslichtbündel im wirksamen Hauptschnitt im Schnittpunkt der Beleuchtungsstrahlrichtung (4) und der Messstrahlrichtung (5) fokussiert ist und einen halben Öffnungswinkel von zwischen einem Grad und drei Grad aufweist sowie ferner umfassend
- eine Datenverarbeitungseinheit (6), die zur Steuerung der Beleuchtungseinheit (2) eingerichtet und mit der Detektoreinheit (3) derart gekoppelt ist, dass Signale der Sensoren (3.2) empfangbar sind und
- einen Datenspeicher (7), der mit der Datenverarbeitungseinheit (6) derart gekoppelt ist, dass von der Datenverarbeitungseinheit (6) erfasste Referenzintensitätswerte und/oder eine Nullpunktposition für den ersten Sensor (3.2) auf dem Datenspeicher (7) ablegbar und von diesem abrufbar sind,
wobei die Datenverarbeitungseinheit (6) für einen fortlaufenden Vergleich gemessener summarischer Intensitätswerte mit auf dem Datenspeicher (7) abgelegten Referenzwerten eingerichtet ist.

10. Messvorrichtung nach Anspruch 9 zur Durchführung eines Verfahrens nach einem der Ansprüche 1 bis 8,
**dadurch gekennzeichnet, dass** die Detektoreinheit (3) einen Strahlteiler (3.1) und einen zweiten lichtempfindlichen ortsauflösenden Sensor (3.3) umfasst, wobei der Strahlteiler (3.1) zur Trennung des oberflächigen Messstrahlenbündels (5.1) von einem parallel zur Messstrahlrichtung (5) versetzten rückflächigen Messstrahlenbündel (5.2) vorgesehen ist und das erste oberflächige Messstrahlenbündel (5.1) auf den ersten Sensor (3.2) abbildet und das rückflächige Messstrahlenbündel (5.2) auf den zweiten Sensor (3.3) abbildet.

11. Messvorrichtung nach Anspruch 9 oder 10,
**dadurch gekennzeichnet, dass** mindestens ein Sensor (3.2, 3.3) eine Apertur aufweist, die doppelt so groß ist wie die Beleuchtungsapertur der Beleuchtungseinheit (2).

12. Messvorrichtung nach Anspruch 10 oder 11,
**dadurch gekennzeichnet, dass** der erste lichtempfindliche Sensor (3.2) ortsauflösend als positionsempfindlicher Detektor und dass der zweite lichtempfindliche Sensor (3.3) ortsauflösend als Zeilenkamera oder als positionsempfindlicher Detektor ausgebildet ist.

13. Verfahren zur Kalibration einer Messvorrichtung nach einem der Ansprüche 10 bis 12 mit einem Referenzprüfkörper mit einer Substratlage (1.1), wobei
- die Beleuchtungseinheit (2) und die Detektoreinheit (3) zueinander im doppelten Brewster-Winkel des Substrats und relativ zum Referenzprüfkörper so angeordnet werden, dass der linienförmige Beleuchtungsabschnitt in der Oberfläche des Referenzprüfkörpers liegt,
- der Polarisationsdreher (2.3) der Beleuchtungseinheit (2) so rotiert wird, dass die Beleuchtungseinheit (2) in der Einfallsebene elliptisch polarisiertes Licht abgibt,
- der Referenzprüfkörper um eine Drehachse entlang des linienförmigen Beleuchtungsabschnitts so gedreht wird, dass der geometrische Schwerpunkt der Intensitätsverteilung des an der Rückfläche des Referenzprüfkörpers reflektierten rückflächigen Messstrahlenbündels (5.2) in der Auffangebene des zweiten Sensors (3.3) an einer vorbestimmten Kalibrierposition liegt,
- der Polarisationsdreher (2.3) der Beleuchtungseinheit (2) so rotiert wird, dass die Beleuchtungseinheit (2) in der Einfallsebene parallel polarisiertes Licht abgibt,
- der geometrische Schwerpunkt der Intensitätsverteilung des an der Oberfläche des Referenzprüfkörpers reflektierten oberflächigen Messstrahlenbündels (5.1) in der Auffangebene des ersten Sensors (3.2) als erster Messlichtnullpunkt bestimmt wird,
- der geometrische Schwerpunkt der Intensitätsverteilung des an der Rückfläche des Referenzprüfkörpers reflektierten rückflächigen Messstrahlenbündels (5.2) in der Auffangebene des zweiten Sensors (3.3) als zweiter Messlichtnullpunkt bestimmt wird,
- der Polarisationsdreher (2.3) der Beleuchtungseinheit (2) so rotiert wird, dass die Beleuchtungseinheit (2) in der Einfallsebene parallel polarisiertes Licht abgibt,
- die summarische Intensität des oberflächigen Messstrahlenbündels (5.1) in der Auffangebene des ersten Sensors (3.2) als oberflächige summarische Referenzintensität und die summarische Intensität des rückflächigen Messstrahlenbündels (5.2) in der Auffangebene des zweiten Sensors (3.3) als rückflächige summarische Referenzintensität erfasst werden.

14. Kalibrationsverfahren nach Anspruch 13,
**dadurch gekennzeichnet, dass** der ortsauflösende erste Sensor (3.2) in der Detektoreinheit (3) so ausgerichtet wird, dass der geometrische Schwerpunkt der Intensitätsverteilung des an der Vorderfläche des Referenzprüfkörpers reflektierten vorderflächigen Messstrahlenbündels (5.1) in der Auffangebene des ersten Sensors (3.2) an einer vorbestimmten Kalibrierposition liegt.

15. Kalibrationsverfahren nach Anspruch 13 oder 14,
**dadurch gekennzeichnet, dass** aus dem Verhältnis der oberflächigen summarischen Referenzintensität zur rückflächigen summarischen Referenzintensität ein Korrekturfaktor ermittelt wird und/oder aus dem Unterschied zwischen dem ersten Messlichtnullpunkt und dem zweiten Messlichtnullpunkt ein Korrekturwinkel ermittelt wird.

## Claims

1. Method for determining modifications effected on a substrate layer (1.1) made from an optically transparent substrate, wherein an illumination beam is focused onto at least one surface (1.2, 1.3) of the substrate layer (1.1) using an illumination unit (2) in a line-shaped illumination section, wherein the illumination beam is collimated along the illumination section and is arranged in a plane of incidence at a half opening angle of between one and three degrees symmetrically about the Brewster angle of the substrate and is polarized parallel with respect to the plane of incidence, and wherein the total intensity of at least one measurement beam (5.1, 5.2) that has been reflected at a surface (1.2, 1.3) of the substrate layer (1.1) is captured using a detector unit (3) and compared to at least one total reference intensity measured at a reference test body.

2. Method according to Claim 1, **characterized in that** at least one measurement light centroid of an intensity distribution of a measurement beam (5.1, 5.2) that has been reflected at a surface (1.2, 1.3) of the structural part (1) is captured in the detector unit (3) with a spatially resolving sensor (3.2, 3.3) and is compared to a geometric measurement light zero point measured at a reference test body.

3. Method according to Claim 2, **characterized in that** an uncoated substrate layer (1.1) is selected as the reference test body and, from the ratio of the total intensity of at least one measurement beam (5.1, 5.2) to a corresponding total reference intensity and from the displacement of the centroid of the intensity distribution of at least one measurement beam (5.1, 5.2) relative to the corresponding geometric measurement light zero point, the thickness of a coating of a substrate layer (1.1) which is coated on one or both sides using the relationship for a theoretical reflectance minimum in the case of multiple beam interference is ascertained.

4. Method according to one of the preceding claims, **characterized in that** simultaneously the total intensity of a front-face measurement beam (5.1) that has been reflected at a front face (1.2) of the substrate layer (1.1) and the total intensity of a rear-face measurement beam (5.2) that has been reflected at a rear face (1.3) of the substrate layer (1.1) are captured.

5. Method according to Claim 4, **characterized in that** the centroid of the superposed intensity distributions of the front-face measurement beam (5.1) and of the rear-face measurement beam (5.2) is captured.

6. Method according to Claim 4 or 5, **characterized in that**, from the ratio of the total intensity of a measurement beam (5.1, 5.2) that has been reflected at a first surface (1.2, 1.3) of the substrate layer (1.1) to the total intensity of a measurement beam (5.1, 5.2) that has been reflected at an opposite, second surface (1.2, 1.3) of the substrate layer (1.1), the coating state of the first surface (1.2, 1.3) is ascertained, wherein a coating of the first surface with a dielectric single layer is ascertained from a ratio of less than fifty.

7. Method according to one of the preceding claims, **characterized in that** the line-shaped illumination section is moved in a predetermined measurement track over the structural part (1) and measurements of the total intensity and/or of the centroid of the intensity distribution of at least one measurement beam (5.1, 5.2) are performed along the measurement track at predetermined temporal intervals or predetermined spatial distances.

8. Method according to Claim 7, **characterized in that**, along the measurement track, changes in the total intensity are measured as dependent statistical variable and changes in the centroid of the intensity distribution of the at least one measurement beam (5.1, 5.2) are measured as independent statistical variable and a linear regression coefficient between the change in the centroid of the intensity distribution and the change in the total intensity is ascertained, wherein a statistically significant, non-zero positive regression coefficient is assigned to a geometric waviness of the substrate layer (1.1) and wherein a statistically non-significant non-zero regression coefficient is assigned to a modification in the coating of the substrate layer (1.1).

9. Measurement device for performing a method according to one of Claims 1 to 3, comprising
- an illumination unit (2), which is oriented in an illumination beam direction (4), having, arranged successively in the illumination beam direction (4), a laser source (2.1), a linear polarizer (2.2), a polarization rotator (2.3) and a cylindrical lens (2.4) for producing an illumination beam that is collimated along the cylinder axis of the cylindrical lens (2.4), and
- a detector unit (3), which is oriented in a measurement beam direction (5), having a first light-sensitive spatially resolving sensor (3.2) which is provided for measuring the total intensity of a measurement beam (5.1, 5.2),
wherein the angle between illumination beam direction (4) and measurement beam direction (5) is adaptable to twice the Brewster angle of the substrate and wherein the refractive power of the cylindrical lens (2.4) is selected such that the illumination beam is focused in the effective meridional plane in the intersection point of the illumination beam direction (4) and the measurement beam direction (5) and has a half opening angle of between one degree and three degrees, and furthermore comprising
- a data processing unit (6), which is set up to control the illumination unit (2) and is coupled to the detector unit (3) such that signals of the sensors (3.2) are receivable, and
- a data memory (7), which is coupled to the data processing unit (6) such that reference intensity values captured by the data processing unit (6) and/or a zero point position for the first sensor (3.2) is storable in the data memory (7) and retrievable therefrom,
wherein the data processing unit (6) is set up for continuous comparison of measured total intensity values to reference values stored in the data memory (7).

10. Measurement device according to Claim 9 for performing a method according to one of Claims 1 to 8, **characterized in that** the detector unit (3) comprises a beam splitter (3.1) and a second light-sensitive spatially resolving sensor (3.3), wherein the beam splitter (3.1) is provided for separating the surface measurement beam (5.1) from a rear-face measurement beam (5.2), which is offset parallel with respect to the measurement beam direction (5), and the first surface measurement beam (5.1) images onto the first sensor (3.2) and the rear-face measurement beam (5.2) images onto the second sensor (3.3).

11. Measurement device according to Claim 9 or 10, **characterized in that** at least one sensor (3.2, 3.3) has an aperture which is twice as large as the illumination aperture of the illumination unit (2).

12. Measurement device according to Claim 10 or 11, **characterized in that** the first light-sensitive sensor (3.2) is embodied in spatially resolving fashion as a position-sensitive detector and **in that** the second light-sensitive sensor (3.3) is embodied in spatially resolving fashion as a line-scan camera or as a position-sensitive detector.

13. Method for calibrating a measurement device according to one of Claims 10 to 12 with a reference test body with a substrate layer (1.1), wherein
- the illumination unit (2) and the detector unit (3) are arranged with respect to one another at twice the Brewster angle of the substrate and relative to the reference test body such that the line-shaped illumination section is located in the surface of the reference test body,
- the polarization rotator (2.3) of the illumination unit (2) is rotated such that the illumination unit (2) emits in the plane of incidence elliptically polarized light,
- the reference test body is rotated about an axis of rotation along the line-shaped illumination section such that the centroid of the intensity distribution of the rear-face measurement beam (5.2) that has been reflected at the rear face of the reference test body is located in the reception plane of the second sensor (3.3) at a predetermined calibration position,
- the polarization rotator (2.3) of the illumination unit (2) is rotated such that the illumination unit (2) emits in the plane of incidence parallel-polarized light,
- the centroid of the intensity distribution of the surface measurement beam (5.1) that has been reflected at the surface of the reference test body is determined in the reception plane of the first sensor (3.2) as a first measurement light zero point,
- the centroid of the intensity distribution of the rear-face measurement beam (5.2) that has been reflected at the rear face of the reference test body is determined in the reception plane of the second sensor (3.3) as a second measurement light zero point,
- the polarization rotator (2.3) of the illumination unit (2) is rotated such that the illumination unit (2) emits in the plane of incidence parallel-polarized light,
- the total intensity of the surface measurement beam (5.1) is captured in the reception plane of the first sensor (3.2) as a surface total reference intensity and the total intensity of the rear-face measurement beam (5.2) is captured in the reception plane of the second sensor (3.3) as a rear-face total reference intensity.

14. Calibration method according to Claim 13, **characterized in that** the spatially resolving first sensor (3.2) is oriented in the detector unit (3) such that the centroid of the intensity distribution of the front-face measurement beam (5.1) that has been reflected at the front face of the reference test body is located in the reception plane of the first sensor (3.2) at a predetermined calibration position.

15. Calibration method according to Claim 13 or 14, **characterized in that** a correction factor is ascertained from the ratio of the surface total reference intensity to the rear-face total reference intensity and/or a correction angle is ascertained from the difference between the first measurement light zero point and the second measurement light zero point.

## Revendications

1. Procédé de détection de modifications apportées à une couche de substrat (1.1) dans un substrat optiquement transparent, dans lequel un faisceau lumineux est focalisé au moyen d'une unité d'éclairement (2) dans une section d'éclairement linéaire sur au moins une surface (1.2, 1.3) de la couche de substrat (1.1), dans lequel le faisceau d'éclairement est collimaté le long de la section d'éclairement et est disposé dans un plan d'incidence dans un demi-angle d'ouverture compris entre un et trois degrés symétriquement par rapport à l'angle de Brewster du substrat et est polarisé parallèlement au plan d'incidence, et dans lequel l'intensité cumulée d'au moins un faisceau de mesure (5.1, 5.2) réfléchi sur une surface (1.2, 1.3) de la couche de substrat (1.1) est acquise au moyen d'une unité de détection (3) et comparée à au moins une intensité cumulée mesurée sur une éprouvette de référence.

2. Procédé selon la revendication 1,
**caractérisé en ce qu'**au moins un centre de gravité géométrique de la lumière de mesure d'une distribution d'intensité d'un faisceau de mesure (5.1, 5.2) réfléchi sur une surface (1.2, 1.3) du composant (1) est acquis dans l'unité de détection (3) par un capteur de résolution spatiale (3.2, 3.3) et est comparé à un centre de gravité géométrique de la lumière de mesure mesurée sur une éprouvette de référence.

3. Procédé selon la revendication 2,
**caractérisé en ce qu'**une couche de substrat non revêtue (1.1) est choisie en tant qu'éprouvette de référence et, à partir du rapport de l'intensité cumulée d'au moins un faisceau de mesure (5.1, 5.2) à une intensité de référence cumulée correspondante ainsi que du décalage du centre de gravité géométrique de la distribution d'intensité d'au moins un faisceau de mesure (5.1, 5.2) par rapport au centre de gravité géométrique correspondant de la lumière de mesure, l'épaisseur d'un revêtement d'une couche de substrat (1.1) revêtue sur une face ou sur les deux faces est déterminée en utilisant la relation correspondant à un minimum théorique du coefficient de réflexion dans le cas d'une interférence entre faisceaux multiples.

4. Procédé selon l'une des revendications précédentes,
**caractérisé en ce que** l'intensité cumulée d'un faisceau de mesure de surface avant (5.1) réfléchi sur une surface avant (1.2) de la couche de substrat (1.1) et l'intensité cumulée d'un faisceau de mesure de surface arrière (5.2) réfléchi sur une surface arrière (1.3) de la couche de substrat (1.1) sont acquises simultanément.

5. Procédé selon la revendication 4,
**caractérisé en ce que** le centre de gravité géométrique des distributions d'intensité superposées du faisceau de mesure de surface avant (5.1) et du faisceau de mesure de surface arrière (5.2) est acquis.

6. Procédé selon la revendication 4 ou 5,
**caractérisé en ce que** l'état de revêtement de la première surface (1.2, 1.3) est déterminé à partir du rapport de l'intensité cumulée d'un faisceau de mesure (5.1, 5.2) réfléchi sur une première surface (1.2, 1.3) de la couche de substrat (1.1) à l'intensité cumulée d'un faisceau de mesure (5.1, 5.2) réfléchi sur une seconde surface opposée (1.2, 1.3) de la couche de substrat (1.1), dans lequel un revêtement de la première surface présentant une couche diélectrique unique est déterminé à partir d'un rapport inférieur à cinquante.

7. Procédé selon l'une des revendications précédentes,
**caractérisé en ce que** la section d'éclairement linéaire est déplacée dans une piste de mesure prédéterminée sur le composant (1) et **en ce que** des mesures de l'intensité cumulée et/ou du centre de gravité géométrique de la distribution d'intensité d'au moins un faisceau de mesure (5.1, 5.2) sont réalisées le long de la piste de mesure à des intervalles de temps prédéterminés ou selon des espacement spatiaux prédéterminés.

8. Procédé selon la revendication 7,
**caractérisé en ce qu'**on mesure le long de la piste de mesure des variations de l'intensité cumulée, en tant que variable statistique dépendante, et des variations du centre de gravité géométrique de la distribution d'intensité dudit au moins un faisceau de mesure (5.1, 5.2), en tant que variable statistique indépendante, et **en ce qu'**un coefficient de régression linéaire est déterminé entre la variation du centre de gravité géométrique de la distribution d'intensité et la variation de l'intensité cumulée, dans lequel un coefficient de régression positif différent de zéro de manière statistiquement significative est associé à une ondulation géométrique de la couche de substrat (1.1) et dans lequel un coefficient de régression différent de zéro de manière statistiquement non significative est associé à une modification du revêtement de la couche de substrat (1.1).

9. Dispositif de mesure pour la mise en oeuvre d'un procédé selon l'une des revendications 1 à 3, comprenant
- une unité d'éclairement (2) orientée dans une direction (4) du faisceau d'éclairement, comportant, successivement agencés dans la direction du faisceau d'éclairement (4), une source laser (2.1), un polariseur linéaire (2.2), un rotateur de polarisation (2.3) et une lentille cylindrique (2.4) destinée à générer un faisceau d'éclairement collimaté le long de l'axe de cylindre de la lentille cylindrique (2.4),
- ainsi qu'une unité de détection (3) orientée dans une direction de faisceau de mesure (5), comportant un premier capteur photosensible de résolution spatiale (3.2) qui est prévu pour mesurer l'intensité cumulée d'un faisceau de mesure (5.1, 5.2),
dans lequel l'angle formé entre la direction du faisceau d'éclairement (4) et la direction du faisceau de mesure (5) peut être adapté au double de l'angle de Brewster du substrat et dans lequel la puissance de réfraction de la lentille cylindrique (2.4) est choisie de manière à ce que le faisceau d'éclairement soit focalisé dans la section principale effective à l'intersection entre la direction du faisceau d'éclairement (4) et la direction du faisceau de mesure (5) et présente un demi-angle d'ouverture compris entre un degré et trois degrés et comprenant en outre
- une unité de traitement de données (6) qui est conçue pour commander l'unité d'éclairement (2) et est couplée à l'unité de détection (3) de manière à ce que des signaux des capteurs (3.2) puissent être reçus et
- une mémoire de données (7) qui est couplée à l'unité de traitement des données (6) de manière à ce que des valeurs d'intensité de référence acquises par l'unité de traitement de données (6) et/ou une position zéro du premier capteur (3.2) puissent être enregistrées dans la mémoire de données (7) et puissent être lues depuis celle-ci,
dans lequel l'unité de traitement de données (6) est conçue pour effectuer en continu une comparaison de valeurs d'intensité cumulées mesurées à des valeurs de référence enregistrées dans la mémoire de données (7).

10. Dispositif de mesure selon la revendication 9 pour la mise en oeuvre d'un procédé selon l'une des revendications 1 à 8,
**caractérisé en ce que** l'unité de détection (3) comprend une séparatrice de faisceau (3.1) et un second capteur photosensible de résolution de spatiale (3.3), dans lequel la séparatrice de faisceau (3.1) est prévue pour séparer le faisceau de mesure de surface (5.1) d'un faisceau de mesure de surface arrière (5.2) décalé parallèlement à la direction du faisceau de mesure (5), et forme une image du premier faisceau de mesure de surface (5.1) sur le premier capteur (3.2) et forme une image du faisceau de mesure de surface arrière (5.2) sur le second capteur (3.3).

11. Dispositif de mesure selon la revendication 9 ou 10,
**caractérisé en ce qu'**au moins un capteur (3.2, 3.3) présente une ouverture qui est deux fois supérieure à l'ouverture d'éclairement de l'unité d'éclairement (2).

12. Dispositif de mesure selon la revendication 10 ou 11,
**caractérisé en ce que** le premier capteur photosensible (3.2) est réalisé sous la forme d'un détecteur sensible à la position permettant une résolution spatiale, et **en ce que** le second capteur est réalisé sous la forme d'une caméra de localisation ou d'un détecteur sensible à la position permettant une résolution spatiale.

13. Procédé d'étalonnage d'un dispositif de mesure selon l'une des revendications 10 à 12, comportant une éprouvette de référence munie d'une couche de substrat (1.1), dans lequel
- l'unité d'éclairement (2) et l'unité de détection (3) sont agencées l'une par rapport à l'autre selon un angle égal au double de l'angle de Brewster du substrat et par rapport à l'éprouvette de référence de manière à ce que la section d'éclairement linéaire se situe dans la surface de l'éprouvette de référence,
- le rotateur de polarisation (2.3) de l'unité d'éclairement (2) est tourné de manière à ce que l'unité d'éclairement (2) délivre une lumière polarisée elliptiquement dans le plan d'incidence,
- l'éprouvette de référence est tournée autour d'un axe de rotation le long de la section d'éclairement linéaire de manière à ce que le centre de gravité géométrique de la distribution d'intensité du faisceau de mesure de surface arrière (5.2) réfléchi sur la surface arrière de l'éprouvette de référence se situe à une position d'étalonnage prédéterminée dans le plan de collecte du second capteur (3.3),
- le rotateur de polarisation (2.3) de l'unité d'éclairement (2) est tourné de manière à ce que l'unité d'éclairement (2) délivre une lumière polarisée parallèlement dans le plan d'incidence,
- le centre de gravité géométrique de la distribution d'intensité du faisceau de mesure de surface (5.1) réfléchi sur la surface de l'éprouvette de référence est déterminé dans le plan de collecte du premier capteur (3.2) en tant premier point zéro de la lumière de mesure,
- le centre de gravité géométrique de la distribution d'intensité du faisceau de mesure de surface arrière (5.2) réfléchi sur la surface arrière de l'éprouvette de référence est déterminé dans le plan de collecte du second capteur (3.3) en tant que second point zéro de la lumière de mesure,
- le rotateur de polarisation (2.3) de l'unité d'éclairement (2) est tourné de manière à ce que l'unité d'éclairement (2) délivre une lumière polarisée parallèlement dans le plan d'incidence,
- l'intensité cumulée du faisceau de mesure de surface (5.1) est acquise dans le plan de collecte du premier capteur (3.2) en tant qu'intensité de référence cumulée de surface et l'intensité cumulée du faisceau de mesure de surface arrière (5.2) est acquise dans le plan de collecte du second capteur (3.3) en tant qu'intensité de référence cumulée de surface arrière.

14. Procédé d'étalonnage selon la revendication 13,
**caractérisé en ce que** le premier capteur de résolution spatiale (3.2) contenu dans l'unité de détection (3) est orienté de manière à ce que le centre de gravité géométrique de la distribution d'intensité du faisceau de surface avant (5.1) réfléchi sur la surface avant de l'éprouvette de référence se situe à une position d'étalonnage prédéterminée dans le plan de collecte du premier capteur (3.2).

15. Procédé d'étalonnage selon la revendication 13 ou 14,
**caractérisé en ce qu'**un facteur de correction est déterminé à partir du rapport de l'intensité de référence cumulée de surface à l'intensité de référence cumulée de surface arrière et/ou **en ce qu'**un angle de correction est déterminé à partir de la différence entre le premier point zéro de la lumière de mesure et le second point zéro de la lumière de mesure.
